# EUROPÄISCHE PATENTSCHRIFT

(11) **EP 4 018 355 B1**
(45) Veröffentlichungstag und Bekanntmachung des Hinweises auf die Patenterteilung: **11.12.2024**
(21) Anmeldenummer: 19759518.4
(22) Anmeldetag: 19.08.2019
(51) Int. Cl.: G06K 7/00, G09F 3/08, H04B 5/00, G09F 3/20

(54) **ELEKTRONISCHES REGALETIKETTEN-SYSTEM MIT KONTAKTLOSER REGALETIKETTEN-ENERGIE- UND/ODER DATENVERSORGUNG**
ELECTRONIC SHELF LABEL SYSTEM WITH SHELF RAIL SUBSYSTEM
SYSTÈME D'ÉTIQUETAGE ÉLECTRONIQUE DES ÉTAGÈRES AVEC SOUS-SYSTÈME DE RAILS D'ÉTAGÈRES

(43) Veröffentlichungstag der Anmeldung: 29.06.2022
(73) Patentinhaber: VusionGroup GmbH, 8072 Fernitz-Mellach (AT)
(72) Erfinder: RÖSSL, Andreas, 8072 Fernitz-Mellach (AT)
(74) Vertreter: Schneider, Michael
(86) Internationale Anmeldenummer: PCT/EP2019/072141
(87) Internationale Veröffentlichungsnummer: WO 2021/032278

(56) Entgegenhaltungen:
- EP-A1- 0 889 425
- EP-B1- 0 623 873
- US-A- 5 548 282
- US-A1- 2001 048 057
- US-A1- 2015 310 775

## Beschreibung

### Technisches Feld

Die Erfindung betrifft ein elektronisches Regaletiketten-System mit Energieversorgung von elektronischen Regaletiketten über eine Regalschiene. Hintergrund.

Ein elektronisches Regaletiketten-System zur Anzeige von Information mit Hilfe von elektronischen Regaletikettenanzeigen, nachfolgend kurz ESL-System genannt, wobei ESL für "Electronic Shelf Label" steht, mit Energieversorgung über eine Regalschiene ist beispielsweise aus der internationalen Patentanmeldung WO 2017/153481 A1 bekannt. Bei diesem bekannten ESL-System ist eine Regalschiene, an der die ESLs angebracht werden, mit elektrischen Leiterbahnen ausgerüstet, die an ein Netzgerät zur elektrischen Versorgung der ESLs angeschlossen sind. Die ESLs weisen an ihrer Rückseite gefederte Kontakte auf, mit denen die Leiterbahnen kontaktiert werden, um die ESLs elektrisch mit dem Netzgerät zu verbinden.

Die bekannte Energieversorgung ist jedoch relativ teuer, weil eine Vielzahl, insbesondere vereinzelter, mechanischer Komponenten in jedem ESL und in jeder Regalschiene vorzusehen ist. Diese mechanischen Komponenten unterliegen einer natürlichen Abnutzung. Zudem können die mechanischen Komponenten bei unsachgemäßer Handhabung verunreinigt oder sogar beschädigt werden. Dies kann im Betrieb zu Störungen führen. Auch geht mit den mechanischen Komponenten ein erheblicher Mehraufwand in der Herstellung wie auch in der Wartung, die zur Vermeidung der genannten Probleme im Betrieb nötig ist, einher. Bei dem bekannten System existiert zudem die Einschränkung, dass die ESLs nicht wahlfrei entlang der Regalschiene positioniert oder verschoben werden können.

Weiters offenbart die US 2001/0048057 A1 eine Halterung zum Ankoppeln einer Regalschiene an eine Regalkante, wobei die Halterung aufweist ein zentrales Körperteil und eine Platte, wobei die Platte zwischen einem oberen und einem unteren Flansch, der sich jeweils oberhalb bzw. unterhalb des zentralen Körperteils erstreckt, so aufgenommen ist, dass sie, wenn die Platte zum Körperteil hin bewegt wird, den oberen Flansch und den unteren Flansch in eine obere bzw. untere Nut drückt, um die Halterung mit der Regalkante zu verbinden.

Weiters offenbart die US 2015/0310775 A1 ein elektronisches Regaletikettensystem, welches mindestens eine Stromversorgung umfasst, die mithilfe einer Solarzelle elektrische Energie erzeugt und die erzeugte elektrische Energie speichert, und mindestens ein elektronisches Regaletikett umfasst, das durch die von der mindestens einen Stromversorgung gelieferte Energie angetrieben wird, Produktinformationen von einem elektronischen Regaletiketten-Gateway empfängt und die Produktinformationen anzeigt.

Die Erfindung hat sich die Aufgabe gestellt, ein verbessertes ESL-System bereitzustellen, bei dem die vorstehend genannten Probleme überwunden sind.

### Zusammenfassung der Erfindung

Diese Aufgabe wird durch eine Regalschiene für ein elektronisches Regaletiketten-System gelöst, wobei die Regalschiene eine erste Befestigungsstruktur zur Befestigung von zumindest einem elektronischen und auf kontaktlose Weise mit Energie versorgbaren Regaletikett, insbesondere einer elektronischen Regaletikettenanzeige, aufweist, wobei die erste Befestigungsstruktur eine zwischen einem Kopfbereich und einem Fußbereich der Regalschiene verlaufende Wand mit einer Wand-Vorderseite und einer Wand-Rückseite aufweist, die mit Ihrer Wand-Vorderseite zur Definition einer Regaletiketten-Ebene für die Positionierung des zumindest einen Regaletiketts entlang der Wand dient, und wobei die Regalschiene zumindest eine, insbesondere röhrenförmig oder kanalförmig ausgebildete, zweite Befestigungsstruktur zur Befestigung von zumindest einer Leiterschleife in einer Leiterschleifen-Ebene aufweist, wobei die Leiterschleifen-Ebene parallel zu der Regaletiketten-Ebene ausgerichtet ist und im definierten ersten Abstand von der Regaletiketten-Ebene verläuft, und wobei die Regalschiene eine dritte Befestigungsstruktur zur Befestigung einer, insbesondere flächenhaft ausgebildeten, Leitfähigkeitsstruktur in einem definierten zweiten Abstand von der Leiterschleifen-Ebene aufweist, dadurch gekennzeichnet, dass die zweite Befestigungsstruktur an der Wand-Rückseite ausgebildet ist, und dass die dritte Befestigungsstruktur derart ausgebildet ist, dass die Leitfähigkeitsstruktur mit einer Höhe aufnehmbar ist, die zumindest die gesamte Leiterschleife abdeckt, insbesondere mit einer Höhe, die etwa der Höhe der Wand gemessen zwischen dem Kopfbereich und dem Fußbereich der Regalschiene entspricht.

Die Aufgabe wird weiterhin durch ein elektronisches Regaletiketten-System gelöst, das zumindest eine erfindungsgemäße Regalschiene aufweist und das zumindest ein elektronisches Regaletikett aufweist, das mit Hilfe der ersten Befestigungsstruktur an der Regaletiketten-Ebene befestigt ist und das eine erste elektronische Schaltung verbunden mit einer Kopplungsspule für seine kontaktlose Energieversorgung aufweist, und das zumindest eine Leiterschleife aufweist, die mit Hilfe der zweiten Befestigungsstruktur in der Leiterschleifen-Ebene befestigt ist, und das eine in die Regalschiene eingesetzte Versorgung-Einrichtung aufweist, die mit besagter zumindest einen Leiterschleife über deren Leiterschleifen-Anschlüsse elektrisch leitend verbunden ist, wobei die Versorgung-Einrichtung eine zweite elektronische Schaltung zur Erzeugung eines Wechselfeldes zwecks Herstellung einer induktiven Kopplung zwischen der Leiterschleife und der Kopplungsspule des Regaletiketts aufweist, und das eine mit Hilfe der dritten Befestigungsstruktur befestigte Leitfähigkeitsstruktur aufweist, wobei die zweite elektronische Schaltung auf die durch die Leitfähigkeitsstruktur definierten Umgebungsbedingungen elektronisch abgestimmt ist.

Mit den erfindungsgemäßen Maßnahmen geht der Vorteil einher, dass die Energieversorgung des Regaletiketts völlig frei von mechanischen Kontakten und den damit einhergehenden Problemen erfolgt. Somit lässt sich das System kostengünstiger herstellen und wegen der vermiedenen, insbesondere wartungsanfälligen, mechanischen Komponenten de facto wartungsfrei betreiben.

Dabei ist die erfindungsgemäße Regalschiene ein wesentliches Element, weil sie die für eine kotaktlose elektrische Versorgung des Regaletiketts notwendige Genauigkeit der Positionierung der Regaletiketts in Bezug auf die Leiterschleife sicherstellt, in dem sie einerseits die Regaletiketten-Ebene und die Leiterschleifen-Ebene und die Orientierung der Ebenen zueinander festlegt und andererseits den dazwischen vorliegenden ersten Abstand genau vorgibt. Diese Parameter-Bereiche) wurden vom Anmelder als bedeutend identifiziert, um eine kontaktlose Energieversorgung des Regaletiketts sicherzustellen und in weiterer Folge auch eine kontaktlose Kommunikation mit dem auf kontaktlose Weise mit Energie versorgten Regaletikett durchzuführen.

Weiterhin hat der Anmelder festgestellt, dass die Umgebung der Regalschiene einen nicht zu vernachlässigenden Einfluss auf die Qualität der kontaktlosen Energieversorgung und auch auf die Qualität der kontaktlosen Kommunikation hat. Dieser Einfluss kann unter dem Begriff "metallische Last" zusammengefasst werden, die bei einer Regaletiketten-Anwendung z.B. durch Metalldosen oder andere metallische Gegenstände auftritt, die auf einem Regalboden positioniert sind, an dessen vorderer Kante die Regalschiene befestigt ist. Aber auch das Regal selbst kann einen Beitrag zu dieser metallischen Last bilden, der in einem Geschäftslokal von Regal zu Regal unterschiedlich sein kann.

Dabei ist zu beachten, dass zur kontaktlosen Energieversorgung auf der Seite der zweiten elektronischen Schaltung der Versorgung-Einrichtung eine Antennenkonfiguration zur Anwendung kommt, die zumindest die Leiterschleife und ein daran angeschlossenes Anpassungsnetzwerk aufweist, wobei die Leiterschleife zusammen mit dem Anpassungsnetzwerk einen Antennen-Schwingkreis der Versorgung-Einrichtung bildet. Angeschlossen an das Anpassungsnetzwerk weist die zweite elektronische Schaltung zudem weitere elektronische Bauteile auf, die zur Realisierung der kontaktlosen Energieübertragung nötig sind. Diese weiteren Bauteile können analoger und/oder digitaler Natur sein. Sie können z.B. bei einer Implementierung basierend auf einem RFID- oder NFC-Reader einen EMV-Filter (EMV steht hier für "Elektromagnetische Verträglichkeit") und einen RFID- oder NFC-Reader IC aufweisen. Dabei wird ein magnetisches Wechselfeld zur induktiven Kopplung mit dem Regaletikett eingesetzt.

Durch die induktive Kopplung der Leiterschleife der Versorgung-Einrichtung mit der Kopplungsspule des Regaletiketts kommt es zu einer Veränderung der Güte des Schwingkreises, wobei die Güte unter anderem einen Einfluss auf die Energieübertragungsreichweite und die Bandbreite der Datenübertragung hat. Sind Umgebungseffekte, wie die erörterte metallische Last zu vernachlässigen, können durch das auf den Einfluss der ersten elektronischen Schaltung des Regaletiketts abgestimmte Anpassungsnetzwerk der zweiten elektronischen Schaltung der Versorgung-Einrichtung im Wesentlichen idealisierte Bedingungen geschaffen werden, sodass die Energieübertragung und die Datenübertragung problemlos durchführbar ist.

Da jedoch in der Realität in den Räumlichkeiten eines Supermarktes üblicherweise unvorhersehbare, auch örtlich unterschiedliche, metallische Lasten auftreten können, die nicht nur statisch vorliegen sondern auch einer zeitlichen Dynamik unterworfen sind (Hinzufügen oder Entfernen von metallischen Gegenständen in den Regalen oder Änderung der Regalanordnung als solches) kann es zu einer nachhaltigen Störung der Energieversorgung einzelner Regaletiketten oder ganzen Gruppen der Regaletiketten und infolge auch zu temporären Störungen der Datenübertragung oder auch völligem Zusammenbruch der Datenübertragung mit den betroffene Regaletiketten kommen. Eine individuelle Abstimmung des Schwingkreises auf die jeweilige Situation würde einen erheblichen Mehraufwand in der zweiten elektronischen Schaltung wie auch in der Planung und operativen Umsetzung im laufenden Betrieb des Regaletiketten-Systems nach sich ziehen. Technisch betrachtet kommt es durch Metall- und Masseflächen in der Nähe der Leiterschleife zu einer Belastung und einer Verstimmung der Antennenkonfiguration. Bei der Kopplung der Antennenkonfiguration mit einer Metallfläche werden im Metall Wirbelströme induziert und das Metall wirkt wie ein Kurzschluss auf das Magnetfeld.

Die erfindungsgemäße Regalschiene bietet jedoch auch für die Problematik der unvorhersehbaren metallischen Last eine Lösung, weil sie eine dritte Befestigungsstruktur aufweist, mit deren Hilfe eine Leitfähigkeitsstruktur - als geplante und damit vorhersehbare metallische Last - im Wesentlichen an der Hinterseite der Regalschiene befestigbar ist oder auch die Regalschiene an der Leitfähigkeitsstruktur befestigbar ist, wenn die Leitfähigkeitsstruktur zuvor an z.B. einem Regal befestigt wurde.

Die Leitfähigkeitsstruktur kann im einfachsten Fall eine Metallplatte sein, die eben ausgebildet sein kann, insbesondere jedoch kann sie als eine in der Elektronikbranche gängige Tragschiene gefertigt aus Metall realisiert sein. Besonders vorteilhaft ist der Einsatz einer Hutschiene, die eine Tragschiene mit einem hutähnlichen Profil ist. Ihre gewinkelt bzw. hutkrempen-artig auslaufenden Ränder, die das hutähnliche Profil ergeben, eignen sich besonders für die mechanische Anbindung an die Regalschiene. Auch ist eine Leiterplatte mit einem großflächigen, im Idealfall die ganze Leiterplatte abdeckenden, metallischen Beschichtung möglich. Ebenso kann eine metallisch beschichtete Kunststoffplatte oder eine Platte aus Verbundwerkstoff zum Einsatz kommen. Als metallische Beschichtung kann im einfachsten Fall z.B. eine Aluminiumfolie zum Einsatz kommen, jedoch sind auch andere Metalle möglich. Zudem muss die Leitfähigkeitsstruktur nicht vollflächig ausgebildet sein. Es können auch streifen-, gitter- oder netzartige Ausbildungen vorgesehen sein, die dann in der Beschichtung oder auch in der gesamten tragenden Struktur der Leitfähigkeitsstruktur ausgebildet bzw. integriert sein können.

Im Unterschied zu der unvorhersehbaren metallischen Last, mit der z.B. in den Räumlichkeiten des Supermarktes zu rechnen ist, kommt es durch die Leitfähigkeitsstruktur nun zu einer vorgegebenen, also definierten Belastung des Schwingkreises, die für alle installierten Regalschienen im Wesentlichen identisch ist und worauf sich das Anpassungsnetzwerk nun einfach abstimmen lässt, um einen zuverlässigen Betrieb durch Energieversorgung und in weiterer Folge auch Datenübertragung sicherzustellen. Die nötige Anpassung des Schwingkreises kann hierbei bereits beim Schaltungsdesign bzw. ab Werk erfolgen, sodass nachträgliche Eingriffe und Änderungen in die Anpassung unnötig sind.

Mit Hilfe der in einem definierten zweiten Abstand von der Leiterschleifen-Ebene gehaltenen Leitfähigkeitsstruktur wird also bewusst eine Dämpfung für den Schwingkreis in Kauf genommen, allerdings mit dem Vorteil, dass die Regalschiene von ihrer Umgebung im Wesentlichen abgeschirmt wird und ihr kontaktloser Betrieb unabhängig bzw. im Wesentlichen entkoppelt vom Hintergrund der im z.B. Supermarkt herrschenden metallischen Last erfolgen kann.

Auch ist eine konkrete Spezifikation des Materials der leitenden Anteile der Leitfähigkeitsstruktur bzw. ganz allgemein der leitfähigen Eigenschaften nicht im Detail nötig, weil es grundsätzlich ausreicht, dass die Leitfähigkeitsstruktur eine solche Leitfähigkeit aufweist, dass ihre Wirkung auf den Schwingkreis im Vergleich zu anderen metallischen Lasten in der Umgebung der Regalschiene dominiert und somit der Schwingkreis auf die dominierende Dämpfung bzw. Belastung abgestimmt werden kann. Dadurch entsteht ein definierter Raum, der durch eine konstante definierte Dämpfung (durch die Leitfähigkeitsstruktur) von der Umgebung und ihrer nun vernachlässigbar kleinen variablen Dämpfungen (durch z.B. metallischen Waren) abgegrenzt ist. Somit kann der Hintergrund verursacht durch andere metallische Lasten vernachlässigt werden.

Zusammengefasst stellen die erfindungsgemäßen Maßnahmen sicher, dass ein Betrieb von kontaktlosen Regaletiketten an der Regalschiene überhaupt erst ermöglicht wird. Hierzu werden definierte geometrische wie auch übertragungstechnische Rahmenbedingungen geschaffen, wobei erst in dieser Kombination ein zuverlässiger Betrieb sichergestellt ist.

Weitere, besonders vorteilhafte Ausgestaltungen und Weiterbildungen der Erfindung ergeben sich aus den abhängigen Ansprüchen sowie der nachfolgenden Beschreibung. Dabei können Merkmale der einen Anspruchs-Kategorie entsprechend den Merkmalen der anderen Anspruchs-Kategorie weiterentwickelt werden, sodass die im Zusammenhang mit der einen Anspruchs-Kategorie angeführten Wirkungen und Vorteile auch für die andere Anspruchs-Kategorien vorliegen.

So kann die Wand beispielsweise vollflächig ausgebildet sein. Sie kann jedoch auch durchbrochen ausgebildet sein, wie z.B. streifenförmig oder netzförmig durchbrochen, oder auch Rundlöcher oder anders geformte Wanddurchbrüche und dergleichen aufweisen, um z.B. Wandmaterial einzusparen.

Gemäß einem weiteren Aspekt der Befestigung der Leitfähigkeitsstruktur kann die dritte Befestigungsstruktur derart ausgebildet sein, dass die Leitfähigkeitsstruktur mit einer Höhe aufnehmbar ist, die zumindest die gesamte Leiterschleife abdeckt, insbesondere mit einer Höhe, die etwa der Höhe der Wand gemessen zwischen dem Kopfbereich und dem Fußbereich der Regalschiene entspricht. Dies ermöglicht eine im Wesentlichen vollflächige Abschirmung aller übertragungsrelevanten Komponenten, wie etwa der Leiterschleife selbst und auch der Komponenten, die an dem Regaletikett ausgebildet sind, das an der Regalschiene befestigt ist.

Weiterhin ist es vorteilhaft, wenn die dritte Befestigungsstruktur zwei Teilstrukturen aufweist, zwischen denen die Leitfähigkeitsstruktur aufnehmbar ist, wobei die erste Teilstruktur entlang des Kopfbereichs der Regalschiene und die zweite Teilstruktur entlang des Fußbereichs der Regalschiene verläuft. Dies erlaubt den Einsatz einer im Wesentlichen einen Großteil der Rückseite der Regalschiene abdeckenden Leitfähigkeitsstruktur und eine kraftschlüssige Verbindung zwischen der Leitfähigkeitsstruktur an ihrem oberen und unteren Rand, also an ihren äußeren Rändern, mit dem Regaletikett.

Ein weiterer Aspekt betrifft die Art und Weise der Verbindung zwischen dem Regaletikett und der Regalschiene, wobei die dritte Befestigungsstruktur entlang der Länge der Regalschiene derart ausgebildet sein kann, dass die Leitfähigkeitsstruktur seitlich in die Regalschiene einschiebbar ist oder die Leitfähigkeitsstruktur an ihren äußeren Rändern in die dritte Befestigungsstruktur einschnappbar ist. Im zweiten Fall muss entweder die Leitfähigkeitsstruktur selbst oder die Regalschiene in einem entsprechenden Ausmaß plastisch verformbar sein, um das Einschnappen zu ermöglichen.

Als besonders vorteilhaft hat es sich erwiesen, wenn die dritte Befestigungsstruktur zur Aufnahme einer plattenförmigen, insbesondere abgesetzte Ränder aufweisenden, Leitfähigkeitsstruktur ausgebildet ist. Hierbei kann es sich um die bereits erwähnte Trageschiene bzw. Hutschiene handeln, wobei die dritte Befestigungsstruktur natürlich die entsprechende Ausbildung zum (dauerhaften) kraftschlüssigen Zusammenwirken mit den abgesetzten Rändern der Hutschiene aufweisen muss.

Um eine großflächige Abschirmung gegenüber einer unbekannten metallischen Last hinter der Regalschiene zu erhalten, hat es ich als vorteilhaft erwiesen, wenn die dritte Befestigungsstruktur zur Aufnahme der Leitfähigkeitsstruktur entlang der gesamten Leiterschleife, besonders bevorzugt entlang der gesamten Regalschiene ausgebildet ist. Eine Leitfähigkeitsstruktur, die im Wesentlichen einen Großteil der Höhe der Rückseite der Regalschiene und auch einen Großteil der Länge der Regalschiene, insbesondere dort, wo sich die Leiterschleife erstreckt, abdeckt, bildet eine optimale Abschirmung gegen eine unbekannte metallische Last. Wird eine Hutschiene als Leitfähigkeitsstruktur verwendet, kann es abschirmungstechnisch von Vorteil sein, wenn die abgesetzten Ränder der Hutschiene hin zu der Leiterschleife orientiert sind, insbesondere die Leiterschleife hin zum Kopfbereich und zum Fußbereich orientiert umfassen, was die Abschirmung noch verbessert.

Ein bei der Regalschien zum Einsatz kommendes elektronisches Regaletikett kann unterschiedlichste Funktionalitäten bereitstellen bzw. Funktionen erfüllen. Das Regaletikett kann z.B. zum Erfassen von Umgebungsparametern, wie z.B. zur Temperatur- oder auch Feuchtigkeitserfassung, oder als Eingabeelement zum Empfang einer Eingabeinteraktion eines Benutzers (z.B. Erfassen eines Fingerabdrucks oder einer Tastenbetätigung) oder auch als Anzeigemedium zur Präsentation einer Information für den Benutzer, nämlich als Regaletikettenanzeige, konfiguriert bzw. dementsprechend ausgebildet sein. In jedem Fall ist das Regaletikett derart ausgebildet, dass es an der gegenständlichen Regalschiene anbringbar ist und dort mit Energie in der nachfolgend im Detail beschriebenen Art und Weise versorgt wird.

Das Regaletikett kann eine proprietäre Schnittstelle zur Energieübertragung aufweise, die nur für diesen Zweck einsetzbar ist. Bevorzugt weist das Regaletikett jedoch eine standardisierte Energieübertragung-Schnittstelle auf, die beispielsweise gemäß dem RFID-Standard (RFID steht für Radio Frequency Identification und ein zutreffender Standard ist z.B. ISO/IEC 18000 usw.) ausgebildet sein kann. Besonders bevorzugt weist das Regaletikett jedoch eine NFC-Schnittstelle für seine kontaktlose Energieversorgung auf. Damit geht der Vorteil einher, dass diese NFC-Schnittstelle nicht nur zur lokalen Energieübertragung am Regal bzw. an der Regalschiene, sondern auch direkt dort zur bidirektionalen kontaktlosen Kommunikation einsetzbar ist. Damit werden insbesondere Probleme im Funkverkehr, die durch andere Funksysteme in einem Geschäft verursacht sind, vermieden, weil diese üblicherweise weit entfernt von den Regalen, wo das Regaletikett installiert ist, lokalisiert sind und daher kaum bis garkeinen Einfluss auf die lokale Energieübertragung wie auch Kommunikation zwischen den eng aneinander positionierten Kommunikationspartnern direkt an der Regalschiene haben. NFC steht hier für Near Field Communication und die zutreffenden Standards sind z.B. ISO/IEC 13157, -16353, -22536, -28361 usw.

Gemäß einem bevorzugten Ausführungsbeispiel der Erfindung realisiert die erste elektronische Schaltung zusammen mit ihrer Kopplungsspule eine erste NFC-Schnittstelle des Regaletiketts und die zweite elektronische Schaltung mit der damit verbundenen Leiterschleife eine zweite NFC-Schnittstelle der Versorgung-Einrichtung. Hier weist die Versorgung-Einrichtung die Funktionalität eines NFC-Lesegeräts, also eines Readers, auf und das Regaletikett weist die Funktionalität eines NFC-fähigen Transponders auf.

Das Regaletikett, wenn konfiguriert als Regaletikettenanzeige, kann eine energiesparende Anzeigeeinheit, wie z.B. eine LCD Anzeige aufweisen. Insbesondere basiert die zur Anwendung kommende Technologie jedoch auf Electronic-Ink- bzw. Electronic-Paper-Technologie. Ein solche Anzeigeeinheit weist also einen reflektiven Bildschirm im Fachjargon auch Electronic-Paper-Display, abgekürzt EPD, genannt und ist mit Hilfe von "elektronischem Papier", kurz "E-Papier" auch englisch "e-paper" oder "e-ink" genannt, realisiert. Diese Begriffe stehen im Wesentlichen für das Prinzip einer elektrophoretischen Anzeige, bei der z.B. positiv geladene, weiße Partikel und negativ geladene, schwarze Partikel in einem transparenten zähflüssigen Polymer enthalten sind. Durch kurzzeitiges Anlegen einer Spannung an Elektroden, zwischen denen das Medium aus Partikeln und Polymer angeordnet ist, werden in Betrachtungsrichtung entweder die schwarzen vor den weißen Partikeln platziert oder umgekehrt. Diese Anordnung bleibt dann ohne weitere Energiezufuhr für relativ lange Zeit (z.B. einige Wochen) aufrecht. Segmentiert man die Anzeige entsprechend, so lassen sich z.B. Buchstaben, Zahlen oder Bilder mit relativ hoher Auflösung realisieren, um besagte Informationen anzuzeigen. Ein solcher reflektiver Bildschirm kann jedoch auch mit Hilfe anderer Technologien, die z.B. unter dem Begriff "electrowetting" oder "MEMS" bekannt sind, realisiert sein. Der Bildschirm kann z.B. wie erwähnt zur Schwarz-Weiß-Wiedergabe, zur Graustufen-Wiedergabe, zur Schwarz-Weiß-Rot- oder auch Schwarz-Weiß-Gelb-Wiedergabe ausgebildet sein. Auch sollen zukünftige Entwicklungen mitumfasst sein, die eine Voll-Farb- oder auch Multi-Color-Wiedergabe ermöglichen. Bei einem solchen Bildschirm handelt es sich ganz allgemein um einen reflektiven, also passiven, nicht selbst leuchtenden Bildschirm bei dem die - relativ statische - Informationswiedergabe darauf basiert, dass von einer externen (künstlichen oder natürlichen) Lichtquelle erzeugtes Licht auf den Bildschirm einstrahlt und von dort zum Betrachter reflektiert wird.

Die Anzeigeneinheit wird mit Hilfe der ersten NFC-Schnittstelle einerseits mit Energie und andererseits mit Daten, die Befehle zur Steuerung der Anzeigeeinheit oder auch Bildinhalte repräsentieren können, versorgt. Es lassen sich während der Energieversorgung über die NFC-Schnittstelle auch besagte Daten über diese NFC-Schnittstelle übermitteln, die von der Anzeigeeinheit dahingehend verarbeitet werden, dass sich der Bildinhalt ihres Bildschirms verändert. Nach abgeschlossener Veränderung des Bildinhalts kann von der Anzeigeeinheit über die NFC-Schnittstelle auch eine entsprechende Status-Information abgegeben werden, welche die erfolgreiche Veränderung des Bildinhalts repräsentiert. Nach abgeschlossener Veränderung des Bildinhalts, gegebenenfalls auch nach Abgabe der Status-Information, kann die Energieversorgung über die NFC-Schnittstelle beendet werden, wonach der Bildinhalt des Bildschirms bis zur nächsten gewollten Veränderung unverändert bleibt.

Der Einsatz der genannten Technologien erlaubt vor allem die Realisierung des Regaletiketts, insbesondere als Regaletikettenanzeige ausgebildet, ohne eine eigene Energieversorgung wie beispielsweise eine Batterie oder einen Akkumulator, die beide relativ teuer sind. Auch muss ein konventionelles Regaletikett zwecks Wartung oder Erneuerung der Batterie oder des Akkumulators derart ausgebildet sein, dass diese Energiespeicher austauschbar sind. Gegebenenfalls kommt in dem Regaletikett nur mehr ein Kondensator oder mehrere Kondensatoren zur kurzfristigen, temporären Glättung bzw. Stabilisierung der internen Versorgungsspannung zur Anwendung. Das Regaletikett ist also derart ausgebildet, dass seine Elektronik zur Kommunikation oder zum Update des Bildschirminhalts oder zum Empfangen von Benutzerinteraktion oder zum Erfassen von Umgebungsparametern, insbesondere seine elektronische Steuerung, immer nur dann aktiv ist, wenn es mit Hilfe der externen elektronischen Versorgung-Einrichtung versorgt wird. Das Gehäuse kann vollständig und dauerhaft gekapselt sein, weil kein Austausch des Energiespeichers mehr nötig ist, so dass es sich nur mehr für Recyclingzwecke (z.B. mit Spezialwerkzeug) öffnen lässt.

Es lässt sich somit ein auf wenige, absolut benötigte elektronische Komponenten reduziertes und daher auch extrem günstiges Regaletikett realisieren. Dieses extrem reduzierte Regaletikett braucht nur mehr über eine Basisfunktionalität zu verfügen, wie z.B. standardisierte NFC-Kommunikation mit standardisierter Energieversorgung während der NFC-Kommunikation, was mit Hilfe eines kommerziell erhältlichen NFC-Moduls realisierbar ist. Updates des Bildschirms der energiesparenden Anzeigeeinheit und Statusbericht dazu, werden nicht direkt von der Regaletikettenanzeige in einer Kommunikation mit einem Access-Point erledigt, so wie dies bei bekannten Systemen der Fall ist, sondern von der zwischengeschalteten Versorgung-Einrichtung abgewickelt, die ihrerseits über eine geeignete (und im Wesentlichen frei wählbare) Kommunikationsmethode mit dem Access-Point in Kontakt steht, worauf nachfolgend noch im Detail eingegangen ist. Gleiches gilt auf analoge Weise für die anderen erwähnten möglichen Funktionalitäten des Regaletiketts.

Die Versorgungseinheit ist dazu ausgebildet, die Energie zur elektrischen Versorgung eines Regaletiketts, das an der Regalschiene korrespondierend zu der Leiterschleife montiert ist, mit Hilfe der Leiterschleife kontaktlos an das Regaletikett zu übertragen. "Kontaktlos" bedeute hier, dass dies mit Hilfe einer induktiven Kopplung zwischen zwei benachbart lokalisierten Leiterschleifen bzw. Spulen erfolgt. So kann das Regaletikett auch eine Leiterschleife bestehend aus einer einzigen Schleife oder einer Vielzahl von Windungen, also eine Spule (wie erwähnt als Kopplungsspule bezeichnet), aufweisen. Weiterhin bedeutet "korrespondierend zu", dass das Regaletikett benachbart zu der durch die Leiterschleife aufgespannten Fläche positioniert ist und dort im Wesentlichen innerhalb einer durch die Leiterschleife begrenzten Zone lokalisiert ist. Die Leiterschleife selbst kann in der Ebene der Regalschiene, z.B. sichtbar, ausgebildet sein oder von einem schützenden Materialstreifen (hier als Wand bezeichnet) abgedeckt oder bedeckt sein.

Um eine zuverlässige Befestigung des Regaletiketts an der Regalschiene zu gewährleisten, ist es von Vorteil, dass die erste Befestigungsstruktur der Regalschiene zusätzlich zu der Wand eine am Kopfbereich ausgebildete und sich entlang des Kopfbereichs erstreckende erste Befestigungsrille und eine am Fußbereich ausgebildete und sich entlang des Fußbereichs erstreckende zweite Befestigungsrille aufweist und die Befestigungsrillen derart ausgebildet sind, dass ein Regaletikett mit seinen Befestigungselementen in sie verriegelnd einsetzbar ist und eine Rückwand des Regaletiketts an der Regaletiketten-Ebene anliegend positionierbar ist. Bevorzugt laufen die beiden Befestigungsrillen parallel zueinander. Das Regaletikett kann korrespondierend zu der Position bzw. dem gegenseitigen Abstand der Befestigungsrillen an seinem Gehäuse Schienen oder Leisten als Befestigungselemente aufweisen, die z.B. in die Befestigungsrillen einsetzbar bzw. dort einschnappbar sind. Somit lässt sich das Regaletikett wahlfrei entlang der Regalschien positionieren, ggf. sogar verschieben.

Bevorzugt ist die Ausbildung bzw. Dimensionierung wie auch Positionierung der Befestigungselemente so gewählt, dass beim in die Regalschiene eingesetzten Regaletikett die Rückseite des Regaletiketts plan an der Regaletiketten-Ebene anliegt oder nur einige zehntel Millimeter davon entfernt positioniert ist.

Hierbei ist es von Vorteil, wenn das Regaletikett eine im Wesentlichen seine Rückseite bildende Leiterplatte aufweist, an der die Kopplungsspule ausgebildet ist. Damit lässt sich eine möglichst nahe Positionierung der Kopplungsspule an der Leiterschleife in einem definierten Abstand von der Leiterschleife realisieren. Es werden also optimierte, definierte und vor allem reproduzierbare geometrische Verhältnisse geschaffen, die einen zuverlässigen kontaktlosen Betrieb begünstigen.

Bei dieser Ausbildung des Regaletiketts ist es zum Schutz der Leiterplatte bzw. der dort lokalisierten Kopplungsspule von Vorteil, wenn zumindest eine nach außen orientierte Seite der Leiterplatte mit einem Lack oder einem dünnen Aufkleber, bevorzugt schützend gegen elektrostatische Entladung ausgebildet, überzogen ist.

Wird also das Regaletikett in die Regalschiene eingesetzt, so befindet sich die in dem Regaletikett verbaute Leiterschleife bzw. Kopplungsspule automatisch in der für die induktive Kopplung zwischen den beiden nebeneinander positionierten Leiterschleifen bzw. Spulen nutzbaren Zone. Bevorzugt sind bei in die Regalschiene eingesetztem Regaletikett die durch die beiden Leiterschleifen bzw. Spulen (einerseits der Regalschiene angehörend und anderseits dem Regaletikett angehörend) aufgespannten Flächen parallel zueinander orientiert, weil ja auch die Regaletiketten-Ebene und die Leiterschleifen-Ebene parallel zueinander orientiert sind, und im Abstand von weniger als einem Millimeter bis hin zu einigen Millimetern lokalisiert. Um die induktive Kopplung nicht zu behindern ist die Regalschiene selbst aus einem geeigneten Material, bevorzugt aus Kunststoff, gefertigt.

Der Umfang der Leiterschleife der Regalschiene kann sich beispielsweise entlang der gesamten Länge der Regalschiene und der gesamten Höhe der Regalschiene erstrecken. Bevorzugt wird die durch die Leiterschleife aufgespannte Fläche jedoch etwas kleiner sein als die durch die physikalischen Dimensionen der Regalschiene definierte Fläche ihrer Vorderseite. Bevorzugt ist die zumindest eine Leitschleife mit Hilfe der zweiten Befestigungsstruktur in die Wand der Regalschiene derart integriert, dass sie bei eingesetztem Regaletikett korrespondierend (benachbart) zu der Rückwand des Regaletiketts, insbesondere benachbart zu der Position der Kopplungsspule des Regaletiketts verläuft. Zur Realisierung der Leiterschleife kann eine einzige umlaufende Leiterbahn oder eine spulenartig mehrfach umlaufende Leiterbahn, also eine mehrere Windungen aufweisende Leiterbahn, vorgesehen sein. Die Leiterschleife weist an ihren beiden Enden je einen Schleifen-Anschluss auf. Die beiden Schleifen-Anschlüsse sind zur Kontaktierung mit der Versorgung-Einrichtung vorgesehen und demgemäß dafür zugänglich.

Die Leiterschleife kann in den beschriebenen Konfigurationen auch durch einen Draht realisiert sein.

Bevorzugt weist die zweite Befestigungsstruktur zwei zueinander in einem dritten Abstand, insbesondere von ca. 1 cm, benachbart und in Längsrichtung der Regalschiene verlaufende Röhren mit jeweils offenem Ende auf, die derart ausgebildet sind, dass in sie ein die Leiterschleife realisierender Draht einsetzbar ist, sodass der Draht an einem Endbereich der Regalschiene die beiden Röhren verbindet und am anderen Endbereich der Regalschien Leiterschleifen-Anschlüsse der Leiterschleife für ihre Kontaktierung zugänglich sind. Die beiden Röhren können derart ausgebildet sein, dass sie den Draht im Wesentlichen formschlüssig derart fassen, dass er relativ präzise an seiner Sollposition gehalten wird und trotzdem noch leichtgängig eingesetzt bzw. entnommen werden kann. Die Leiterschleife kann in dieser Ausbildung aus zumindest drei im Wesentlichen geradlinig verlaufenden Abschnitten bestehen.

Bevorzugt weisen die Röhren einen Durmesser von etwas weniger als 1 mm auf und der Drahtdurchmesser ist entsprechend darauf abgestimmt, damit der Draht problemlos in die Röhren eingesetzt werden kann.

Die Regalschiene kann mit einer einzigen Leiterschleife ausgestattet sein. Es kann jedoch auch vorteilhaft sein, wenn entlang der Längserstreckung der Regalschiene eine Mehrzahl von Leiterschleifen ausgebildet ist, die jede für sich mit der Versorgungseinheit (wie erwähnt) gekoppelt ist, und die Versorgungseinheit zur selektiven Energieübertragung mit Hilfe jeder der Leiterschleifen ausgebildet ist. Dies ermöglicht die wahlweise Energieversorgung für ein einziges Regaletikett oder eine Gruppe von Regaletiketten. Je nach Implementierung können entlang der Regalschiene beispielsweise 2 oder 3 oder bis zu 15 oder sogar wesentlich mehr Leiterschleifen realisiert sein. Diese Leiterschleifen sind entlang der Längserstreckung der Regalschiene nebeneinander positioniert und ihre jeweils beiden Schleifen-Anschlüsse entlang der Regalschiene zu der Versorgung-Einrichtung hingeführt und dort mit ihr elektrisch leitend verbunden. Die Längserstreckung der durch die jeweilige Leiterschleife abgedeckten Zone an der Regalschiene kann für alle Leiterschleifen identisch sein. So können entlang der Regalschiene viele eng beieinander liegende Zonen definiert sein, deren jeweilige Längserstreckung sich an der Längserstreckung des an der Regalschiene zur Anwendung kommenden Regaletiketts orientiert, wobei die Längserstreckung üblicherweise einige cm aufweist, wie z.B. 8-12 cm. Dies ermöglicht die individuelle (selektive) induktive Kopplung mit jedem einzelnen Regaletikett an (beinahe) beliebigen Positionen entlang der Regalschiene. Dies ist dann von Vorteil, wenn die Positionierung des Regaletiketts möglichst flexibel erfolgen soll und trotzdem eine möglichst individuelle induktive Kopplung mit jedem Regaletikett möglich sein soll. Es können jedoch auch größere Zonen vorgesehen sein, in denen sich dann mehrere Regaletiketten befinden können, die dann gemeinsam mit der betroffenen Leiterschleife eine induktive Kopplung eingehen können. Diese Konfiguration kann dann zur Anwendung kommen, wenn die exakte Position des jeweiligen Regaletiketts keine Rolle spielt. Ein solcher Fall ist dann gegeben, wenn z.B. auf einem Regal über einen längeren Abschnitt oder die Gesamtlänge des Regals hinweg mehrerer identische Produkte platziert sind und durch mehrere in größeren Abständen zueinander entlang der Längserstreckung der Regalschiene platzierte Regaletikettenanzeigen immer die gleiche Information zu diesen Produkten präsentiert wird. Entlang einer Regalschiene können jedoch auch gemischte Konfigurationen aus relativ kurzen Zonen und im Verhältnis dazu auch relativ langen Zonen vorliegen.

Die Leiterschleifen können alle gemeinsam, also gleichzeitig, zur Energieübertragung von der Versorgung-Einrichtung genutzt werden. Dies bedeutet jedoch für die Elektronik der Versorgung-Einrichtung ein entsprechend aufwändiges Design. Daher hat es sich als besonders vorteilhaft erwiesen, wenn die Versorgungseinheit zum Multiplexen der Energieübertragung über die Leiterschleifen ausgebildet ist. Es wird dabei immer nur eine einzige Leiterschleife, die elektronisch ausgewählt ist, zur Energieübertragung verwendet.

Wie auf analoge Weise bereits im Zusammenhang mit dem Regaletikett erörtert, kann die Versorgung-Einrichtung hinsichtlich ihrer zur Energieübertragung geeigneten Schnittstelle unterschiedlich ausgebildet sein. Bevorzugt ist die Versorgungseinheit jedoch als eine zweite NFC-Schnittstelle zur kontaktlosen Energieversorgung eines Regaletiketts ausgebildet, wobei die mindestens eine Leiterschleife ein zur kontaktlosen Energieübertragung (wie auch zur kontaktlosen Kommunikation) bestimmter Bestandteil der NFC-Schnittstelle ist.

Ganz allgemein ist hier festzustellen, dass die Leiterschleife somit eine Induktivität realisiert, die zur induktiven Kopplung mit der korrespondierenden Induktivität auf der Seite des Regaletiketts zum Einsatz kommt.

Weiterhin kann die mindestens eine Leiterschleife mit Hilfe der zweiten Befestigungsstruktur in die Regalschiene integriert oder an ihr befestigt sein. Die Integration in die Regalschiene ist dann vorteilhaft, wenn die Regalschiene beispielsweise aus Kunststoff gefertigt ist und bereits beim z.B. Spritzgießen, also bei der Fertigung der Regalschiene, die Leiterschleife dort integriert wird. Die Leiterschleife kann jedoch auch auf der Oberfläche der Wand der Regalschiene, z.B. durch Aufkleben, befestigt werden. Insbesondere dann, wenn viele Leiterschleifen, die nebeneinander angeordnet sind, gefordert sind und dementsprechend auch viele Zuleitungen zu berücksichtigen sind, hat es sich als vorteilhaft erweisen, wenn die Leiterschleife(n) auf einer Leiterplatte ausgebildet ist (sind). Diese Leiterplatte kann dann als eigener Bauteil in die Regalschiene integriert oder an ihr befestigt werden. Auch kann die Regalschiene derart ausgebildet sein, dass die Leiterplatte austauschbar ist, sodass leicht auf unterschiedlichste Anforderungsprofile in der Regalplanung mit unterschiedlichsten Leiterschleifenkonfigurationen, die z.B. auf einer einzigen Leiterplatte oder auch auf verschiedenen Leiterplatten realisiert sein können, reagiert werden kann. Auch kann die Regalschiene selbst eine Leiterschleifen-Aufnahme aufweisen. Diese kann so ausgebildet sein, dass sie z.B. an der Vorderseite der Regalschiene lokalisierst ist, also dort wo die Rückseite des Regaletiketts im an der Regalschiene befestigten Zustand möglichst nahe an der Regalschiene positioniert ist. Die Leiterschleifen-Aufnahme kann jedoch auch korrespondierend zu jenem Bereich der Regalschiene, wo das Regaletikett angebracht werden kann, an der Rückseite der Regalschiene, insbesondere an der Rückseite der Wand der Regalschiene, verlaufen, was eine bessere Zugänglichkeit der Leiterschleife für Wartungszwecke mit sich bringen kann oder auch einen unübertrefflichen Schutz gegen Beschädigung sicherstellt. Letztendlich ist die Leiterschleife dort auch vor den Blicken der Kunden eines Supermarkts verborgen. Strukturell kann die Leiterschleifen-Aufnahme z.B. durch eine spaltförmige oder kanalförmige Vertiefung oder wie erwähnt röhrenförmige Ausbildung im z.B. Kunststoffmaterial der Regalschiene realisiert sein, in welche Vertiefung die Leiterschleife eingesetzt ist. Damit kann auch die Form der Leiterschleife wie auch ihre exakte Position möglichst präzise ohne weitere Maßnahmen (wie z.B. die zuvor erwähnte Leiterplatte und ihre Positionierung) definiert werden. Auch kann die rückseitig positionierte Leiterschleife praktisch an jedem beliebigen Punkt mit einer Elektronik der Versorgung-Einrichtung elektrisch leitend verbunden werden, ohne dass auf die Position der vorderseitig an der Regalschiene positionierten Regaletiketten Rücksicht genommen werden muss. Die Vertiefung kann auch einen Schnapp- bzw. Fixierungsmechanismus aufweisen, der die Leiterschleife in ihrer Sollposition fixiert. Auch kann die Vertiefung derart ausgebildet sein, dass sie eine Mehrzahl an Windungen der Leiterschleife aufnehmen kann, wobei diese nebeneinander und/oder übereinander in der Vertiefung angeordnet sein können.

Auch ist man bei der Integration einer Leiterschleifen-Aufnahme direkt in die Regalschiene (also in ihr Material) bei Planung bzw. Herstellung der Leiterschleife nicht an die Grenzen des Herstellungsprozess für Leiterplatten gebunden und kann somit auch Leiterschleifen mit einer Länge realisieren, die jene für Leiterplatten von gegenwärtig ca. einem Meter bei weitem übertreffen. Es lässt sich somit durchaus auch eine Leiterschleife realisieren, die sich entlang einer gesamten Regalschiene erstreckt, die mehrere Meter lang sein kann.

Als besonders vorteilhaft hat es sich erwiesen, wenn pro Regalschiene genau eine einzige elektronische Versorgung-Einrichtung zum Einsatz kommt. Dies erlaubt eine fokussierte Energieversorgung nur für diese eine Regalschiene zu realisieren.

In diesem Zusammenhang hat es sich weiterhin als besonders vorteilhaft erwiesen, wenn die elektronische Versorgung-Einrichtung in die Regalschiene integriert oder an ihr befestigt ist. Somit lässt sich eine Regalschiene mit individueller elektronischer Energieversorgung realisieren. Dabei kann die Versorgung-Einrichtung z.B. auch direkt an der Leiterplatte ausgebildet sein oder als Modul mit ihr verbunden sein oder als Modul mit der Regalschiene mechanisch gekoppelt sein und mit der Leiterschleife der Regalschiene elektrisch leitend verbunden sein. Dadurch kann die Regalschiene als Ganzes inklusive ihrer Versorgung-Einrichtung vertragen und an einem anderen Ort problemlos wieder in Betrieb genommen werden.

Als besonders vorteilhaft hat es sich erwiesen, wenn die Regalschiene eine vierte Befestigungsstruktur aufweist, die zur Befestigung einer Versorgung-Einrichtung für die kontaktlose Energieversorgung des zumindest einen Regaletiketts unter Ausnutzung der zumindest einen Leiterschleife dient, wobei die vierte Befestigungsstruktur zwischen der zweiten und der dritte Befestigungsstruktur derart ausgebildet ist, dass die Versorgung-Einrichtung an einem (seitlichen, also linken oder rechten) Endbereich der Regalschiene zwischen die Wand der Regalschiene und die mit Hilfe der dritten Befestigungsstruktur befestigbare Leitfähigkeitsstruktur einschiebbar ist, so dass dort verfügbare Leiterschleifen-Anschlüsse der Leiterschleife mit der Versorgung-Einrichtung kontaktierbar sind. Es können die zur Kontaktierung vorgesehenen Leiterschleifen-Anschlüsse oder auch zusätzliche vorgesehene Kontaktierungselemente, wie z.B. Flächen, in einem Winkel, insbesondere 90° in Bezug auf die entlang der Regalschiene geradlinig verlaufenden Teile der Leiterschleife, orientiert sein. Dies kann zur Sicherung der Leiterschleife in ihrer Sollposition, insbesondere zur Sicherung der Leiterschleifen-Anschlüsse in ihrer Sollposition beitragen.

Um eine zuverlässige Kontaktierung der Leiterschleifen-Anschlüsse innerhalb der Regalschiene, also in einer durch die Regalschiene geschützten Umgebung zu ermöglichen, ist es von Vorteil, wenn die elektronische Versorgung-Einrichtung Kontaktierungselemente, insbesondere gefedert gelagerte Kontaktstifte, zum Herstellen einer elektrisch leitenden Verbindung mit den Leiterschleifen-Anschlüssen aufweist, und die Kontaktierungselemente derart positioniert sind, dass sie die Leiterschleifen-Anschlüsse kontaktieren, wenn sich die Leiterschleife und die Versorgung-Einrichtung in ihren Sollpositionen in der Regalschiene befinden.

Dies ermöglicht einerseits einen einfachen Zusammenbau der Regalschiene mit der zughörigen Versorgung-Einrichtung, wobei die seitlich positionierte Versorgung-Einrichtung mit ihrem Gehäuse zugleich die Regalschiene seitlich abschließen kann und ggf. dort mit weiteren elektronischen Geräten über ein Kabel verbunden sein kann, ohne dass zusätzliche Öffnungen an der Regalschiene für das Hindurchführen eines Kabels nötig wären. Auch für den Fall, dass die Versorgung-Einrichtung funktechnisch erreichbar sein soll, hat sich die Positionierung der Versorgung-Einrichtung am Rand der Regalschiene als vorteilhaft erwiesen. So kann die Versorgung-Einrichtung z.B. einige Millimeter bis hin zu ca. einem cm aus der Regalschiene herausragend positioniert werden, sodass der aus der Regalschiene herausragende Teil nicht mehr durch die Leitfähigkeitsstruktur abgeschirmt ist und daher ungehindert mit einem dort integrierten Funkmodul gefunkt werden kann.

Die Energieversorgung der Versorgung-Einrichtung kann auf unterschiedliche Weise realisiert sein. So kann die Versorgung-Einrichtung beispielsweise über ein Ethernet-Kabel erfolgen, das die Versorgung-Einrichtung mit anderen Kommunikationseinrichtungen verbindet, wobei über dieses Ethernet-Kabel auch die Versorgungsspannung bereitgestellt wird. Es kann jedoch auch eine separate Versorgungsstation (z.B. ein Netzgerät) zur Energieversorgung der elektronischen Versorgung-Einrichtungen vorgesehen sein. Bevorzugt versorgt diese Versorgungsstation eine Gruppe von elektronischen Versorgung-Einrichtungen, besonders bevorzugt für ein ganzes Regal, insbesondere für eine Gruppe von Regalen. Dies erlaubt den modularen Aufbau einer Versorgungsinfrastruktur für ein einziges Regal oder für geographisch oder thematisch sortierte Gruppen von Regalen oder auch nur die Reduktion der Anzahl der Versorgungsstationen auf ein nötiges Mindestmaß.

Besonders bevorzugt ist die elektronische Versorgung-Einrichtung jedoch auf funkbasierte Weise mit Energie versorgbar ausgebildet, und die Versorgungsstation ist ihrerseits als Funk-Energiequelle zur, insbesondere gerichteten, funkbasierten Energieversorgung der elektronischen Versorgung-Einrichtung ausgebildet. Mit Hilfe der Versorgungsstation erfolgt also eine kontaktlose zielgerichtete Energieübertragung hin zur Versorgung-Einrichtung. Dies ermöglicht eine im Wesentlichen kabelfreie Versorgungsinfrastruktur von einerseits der an der Regalschiene befestigten Regaletiketten und andererseits auch der für die Versorgung der Regaletiketten vorgesehenen Versorgung-Einrichtung. De facto erspart sich der Errichter des Systems die Verkabelung zwischen der tatsächlichen Energiequelle und dem jeweiligen Regal. Dieser Umstand ermöglicht eine im Wesentlichen wahlfreie Positionierung der Regale im Geschäft wie auch die wahlfreie und einfache Positionierung der Regalschienen an verschiedensten Regalen wie auch deren Austausch zwischen den Regalen. Diese Art der Energieübertragung wie auch die zugrundeliegende Technologie ist unter dem Begriff "Power over WiFi" bekannt. Mit dieser Technologie ausgerüstete Funk-Energiequellen lassen sich beispielsweise an der Decke eines Geschäftslokals installieren und versorgen in einem Umkreis von bis zu maximal 10 Meter selektiv die dort den jeweiligen Regalschienen zugeordneten und in diesem Umkreis lokalisierten Versorgung-Einrichtungen mit Hilfe von zu ihnen hingerichteten leistungsstarken, also fokussierten Funksignalen.

Weiterhin kann die elektronische Versorgung-Einrichtung auch zum kontaktlosen Kommunizieren mit dem Regaletikett unter Ausnutzung jener Technologie, die auch zur Energieübertragung an das Regaletikett zum Einsatz kommt, ausgebildet sein. Bevorzugt kommt hierbei wieder die bereits erwähnte NFC-Technologie zum Einsatz. Dies erlaubt eine möglichst optimale Ausnutzung der verfügbaren elektronischen Komponenten für sowohl die kontaktlose Energieübertragung als auch die kontaktlose Kommunikation über relativ kurze Distanzen, so wie dies bei an der Regalschiene befestigten Regaletiketten der Fall ist.

Zusätzlich zu der NFC-Schnittstelle, die für die Kommunikation mit den Regaletiketten vorgesehen ist, weist die Versorgung-Einrichtung eine weitere Schnittstelle auf, die zur Kommunikation mit einem Access-Point bestimmt ist. Diese weitere Schnittstelle kann zur Funkkommunikation ausgebildet sein. Für die Funk-Kommunikation mit dem Access-Point kann ein Zeitschlitz-Kommunikationsverfahren, insbesondere ein proprietäres Zeitschlitz-Kommunikationsverfahren wie es aus der WO2015/124197, Seiten 2 bis 4, bekannt ist, deren spezifische Offenbarung mittels Bezugnahme hiermit aufgenommen ist ("incorporated by reference"). Für die Funkkommunikation kann aber auch ein Kommunikationsprotokoll basierend auf den Standards bzw. Spezifikationen ZigBee, Bluetooth oder WiFi usw. zur Anwendung kommen. Die zweite Schnittstelle kann jedoch auch zur kabelgebundenen Kommunikation ausgebildet sein, sodass die Kommunikation über ein Ethernet-Kabel erfolgen kann. Über das Ethernet-Kabel kann auch wie erwähnt die benötigte Versorgungsspannung zugeführte werden, was in Fachkreisen unter dem Begriff "Power over Ethernet", abgekürzt "PoE", bekannt ist.

Die Versorgung-Einrichtungen realisiert somit kommunikationstechnisch betrachtet einen "Gateway" für die Gesamtheit der an der betreffenden Regalschiene montierten Regaletiketten.

Der Access-Point dient als übergeordnete Schnittstelle zwischen den Regaletiketten einer die Regaletiketten steuernden IT-Infrastruktur, wie beispielsweise Server mit entsprechender Software-Applikation und dergleichen. Typischerweise ist in einem funkbasierten System eine Gruppe von Regaletiketten einem solchen Access-Point funktechnisch (logisch) zugeordnet, sodass die Kommunikation mit dieser Gruppe von Regaletiketten nur über diesen Access-Point erfolgt. In einem Geschäftslokal eines zum Beispiel Supermarkts können mehrere solche Access-Points installiert sein, wobei jeder Access-Point für die Kommunikation mit ihm logisch zugeordneten Regaletiketten vorgesehen ist, die in einem geographischen (funktechnisch erreichbaren) Bereich um ihn herum lokalisiert sind.

Der Access-Point kann zusätzlich zu dieser Funktionalität auch die Versorgungsstation aufweisen, die zur gerichteten, funkbasierten Energieversorgung der elektronischen Versorgung-Einrichtung ausgebildet ist.

Summarisch betrachtet realisiert die Versorgung-Einrichtung bei der betreffenden Regalschiene eine kombinierte Energieversorgung- und Kommunikationsversorgung-Einrichtung für die an der betreffenden Regalschiene befestigten Regaletiketten. Die Versorgung-Einrichtung ist somit für eine lokale kontaktlose Energieübertragung wie auch lokale kontaktlose Kommunikation mit an der Regalschiene befestigten Regaletiketten konfiguriert bzw. ausgebildet. Eine solche Versorgung-Einrichtung kann auch als Regalschienen-Steuereinrichtung oder auch Regalschienen-Controller bezeichnet werden, weil sie alle Aktivitäten der an der betreffenden Regalschiene montierten Regaletiketten steuert, was sowohl das Anzeigeverhalten, das Kommunikationsverhalten, als auch die jeweilige Energieversorgung umfasst. Dabei generiert die Leitfähigkeitsstruktur mit ihrer dämpfenden Eigenschaft eine für alle Regalschienen reproduzierbare Umgebung, so dass eine einheitliche Abstimmung des (Antennen-)Schwingkreises der Versorgung-Einrichtung ausreicht, um an unterschiedlichsten Positionen in einem Geschäftslokal und unter dort herrschenden unterschiedlichsten Bedingungen eine kontaktlose Energieversorgung und in Folge auch eine kontaktlose Kommunikation durchzuführen.

Als besonders vorteilhaft hat es sich zudem erwiesen, wenn die elektronische Versorgung-Einrichtung zum Empfangen und Weiterleiten einer eindeutigen Kennung des an der Kommunikation beteiligten Regaletiketts zwecks Bestimmung der Position des betreffenden Regaletiketts ausgebildet ist.

Sind innerhalb einer Leiterschleife der Regalschiene mehrere Regaletiketten angeordnet bzw. werden mehrere Regaletiketten gleichzeitig mit Energie über eine einzige Leiterschleife versorgt, müssen Vorkehrungen getroffen werden, um den Empfang der jeweiligen Kennung sicherzustellen. Zu diesem Zweck können die Regaletiketten beispielsweise so programmiert sein, dass sie ihre Kennung zu zufällig ausgewählten Zeitpunkten innerhalb eines Zeitfensters (einfach oder mehrfach) abgeben, um den individuellen Empfang bei der Versorgung-Einrichtung sicherzustellen. Ebenso kann bei dieser kontaktlosen Übertragung ein z.B. aus der RFID-Technologie bekanntes Anti-Kollision-Verfahren zur Anwendung kommen, um den individuellen Empfang bei der Versorgung-Einrichtung sicherzustellen.

Die Weiterleitung der eindeutigen Kennung erfolgt dabei bevorzugt an eine Datenverarbeitungseinrichtung, wie beispielsweise einen Server des Geschäftslokals, der die Kommunikation mit den einzelnen elektronischen Regaletiketten durchführt.

Der Server kann auch die logische Verknüpfung zwischen Produkten, die auf dem jeweiligen Regal ausgestellt sind, und den dort positionierten Regaletikettenanzeigen speichern und somit sicherstellen, dass die jeweilige Regaletikettenanzeige jene Informationen präsentiert, die zu dem betreffenden Produkt gehören.

Der Server ist auch über die Position oder Erstreckung der jeweiligen Leiterschleife an der Regalschiene informiert und wird von der Versorgung-Eirichtung zusammen mit der Kennung auch darüber informiert, welche Leiterschleife zum Bezug der Kennung von dem Regaletikett benutzt wurde. Damit lassen sich auch dreidimensionale digitale Landkarten der Positionen der Gesamtheit der Regaletiketten in einem Geschäftslokal erstellen. Dies betrifft sowohl die zum Anzeigen von Information konfigurierten Regaletiketten wie auch auf analoge Weise die anderen erwähnten möglichen Funktionalitäten des Regaletiketts.

Die Anmeldung offenbart somit auch eine "intelligente" Regalschiene, an der zumindest ein elektronisches Regaletikett befestigbar ist und die aufweist:
- zumindest eine an der Regalschiene ausgebildete Leiterschleife, und
- eine Versorgung-Einrichtung, die zur kontaktlosen Energieversorgung des zumindest einen Regaletiketts ausgebildet ist, wobei die Leiterschleife ein Bestandteil der Versorgung-Einrichtung ist und zur kontaktlosen Versorgung eines Regaletiketts mit Energie dient, das an der Regalschiene korrespondierend zu der Leiterschleife montiert ist.

Bevorzugt kann die Ausbildung der Versorgung-Einrichtung zur Energieversorgung mit Hilfe eines NFC-Interfaces realisiert sein, so wie dies bereits erörtert wurde, wobei die Leiterschleife ein Bestandteil des NFC-Interfaces ist.

Die Elektronik der verschiedenen Vorrichtungen des Systems wie auch deren Interface usw. kann mit Hilfe unterschiedlichster passiver wie auch aktiver elektronischer Bauteile auf diskrete wie auch integrierte Weise realisiert sein. Bevorzugt kommt dabei auch ein Mikroprozessor mit entsprechenden Peripheriebausteinen oder ein Mikrokontroller zum Einsatz, worauf eine Software zur Bereitstellung der verschiedenen Funktionalitäten abgearbeitet wird. Auch können sogenannte ASICs (Application-Specific Integrated Circuits) zur Anwendung kommen.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein erfindungsgemäßes elektronisches Regaletiketten-System gemäß einem ersten Ausführungsbeispiel;
- Fig. 2: ein Blockschaltbild einer Regaletikettenanzeige;
- Fig. 3: ein Blockschaltbild einer Regalschiene mit einer Versorgung-Einrichtung;
- Fig. 4: ein zweites Ausführungsbeispiel des Regaletiketten-Systems;
- Fig. 5: ein zweites Ausführungsbeispiel der Regalschiene;
- Fig. 6: eine perspektivische Ansicht der Regalschiene mit einer Versorgung-Einrichtung;
- Fig. 7: einen Querschnitt der Ansicht gemäß der Figur 6 entlang der Schnittfläche A-A;
- Fig. 8: einen Querschnitt der Ansicht gemäß der Figur 6 entlang der Schnittfläche B-B;
- Fig. 9: eine Ansicht der Regalschiene mit nur teilweise eingesetzter Versorgung-Einrichtung;
- Fig. 10: die zu der Figur 9 ähnliche Ansicht mit Kontaktierungselementen der Versorgung-Einrichtung.

### Beschreibung der Ausführungsbeispiele

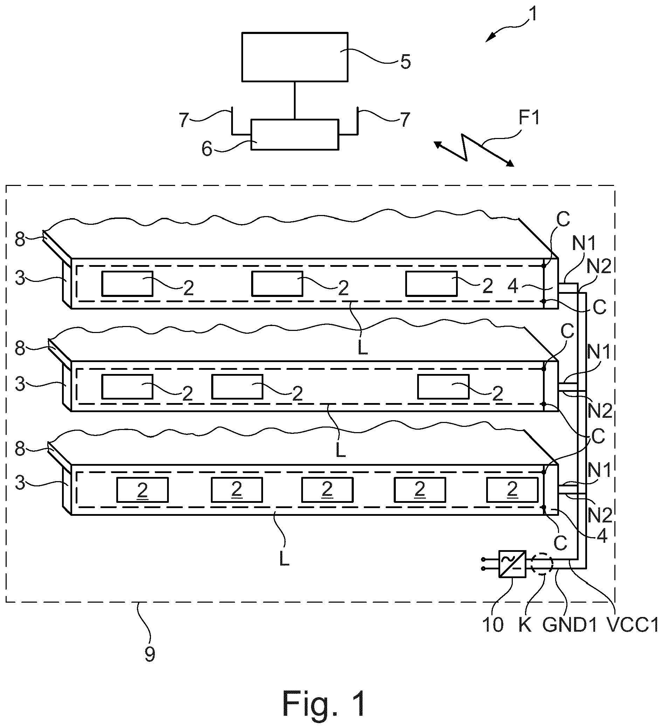

In der Figur 1 ist ein Regaletiketten-System 1 dargestellt, das eine Anzahl von identisch ausgebildeten elektronischen Regaletiketten realisiert als Regaletikettenanzeigen 2 umfasst, die an drei erfindungsgemäßen - "intelligenten" - Regalschienen 3 befestigt sind. Jede Regalschiene 3 weist eine elektronische Versorgung-Einrichtung 4 auf, die seitlich in sie eingesetzt ist. Ebenfalls dargestellt ist eine Datenverarbeitungseinrichtung, die mit Hilfe eines Server 5 realisiert ist, der kabelgebunden mit einem Access-Point 6, der beispielhaft zwei Antennen 7 aufweist, verbunden ist. Die dargestellten Versorgung-Einrichtungen 4 stehen mit dem Access-Point 6 über erste Funksignale F1 im Funkkontakt. Damit lassen sich von dem Server 5 aus die Bildinhalte der Regaletikettenanzeigen 2 verändern, gegebenenfalls auch zugehörige Statusinformationen von den Regaletikettenanzeigen 2 abfragen und an den Server 5 übertragen. Jede der Regalschienen 3 ist an einem individuellen Regalboden 8 an dessen Vorderkante montiert. Die drei dargestellten Regalböden 8 gehören alle zu einem nur sehr schematisch angedeuteten Regal 9. Auf dem Regalboden 8 können verschiedene Produkte abgelegt werden, die jedoch im vorliegenden Fall nicht dargestellt sind.

Für die elektrische Versorgung der Versorgung-Einrichtungen 4 ist ein dem Regal 9 zugeordnetes separates Netzteil 10 als Versorgungsstation vorgesehen, das eine eingangsseitige Netz-Wechselspannung (von z.B. 230 V) auf eine für die Versorgung-Einrichtungen 4 geeignete Gleichspannung als erste Versorgungsspannung VCC1 (von zum Beispiel 12 V) gegenüber einem ersten Bezugspotential GND1 umwandeln. Diese erste Versorgungsspannung VCC1 wird den Versorgung-Einrichtungen 4 mit Hilfe eines Kabels K über ihre Versorgung-Anschlüsse N1 und N2 zugeführt.

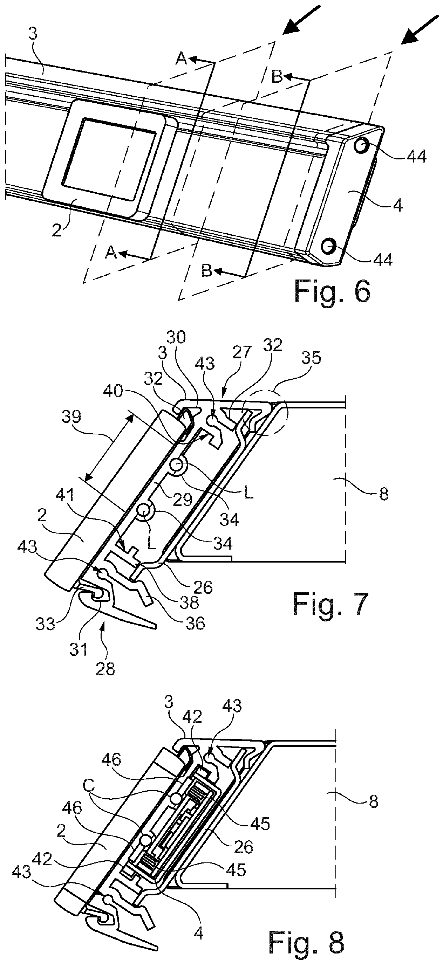

Die Versorgung-Einrichtungen 4 sind jeweils am rechten Rand der Regalschienen 3 schematisch dargestellt, was jedoch nicht zwingend so sein muss. Sie können sich also auch an anderen Positionen entlang der Regalschiene 3 befinden. Die Versorgung-Einrichtungen 4 sind im vorliegenden Fall in die Regalschienen 3 integriert, also zum Beispiel in einem Schacht (hier nicht dargestellt, siehe jedoch Fig. 7) verbaut bzw. eingesetzt.

Weiterhin zeigt die Figur 1 jeweils eine einzige in die Regalschiene 3 integrierte Leiterschleife L, die mit ihren beiden Schleifen-Anschlüssen C mit der dort verbauten Versorgung-Einrichtung 4 verbunden ist. Die Regalschienen 3 tragen die Regaletikettenanzeigen 2.

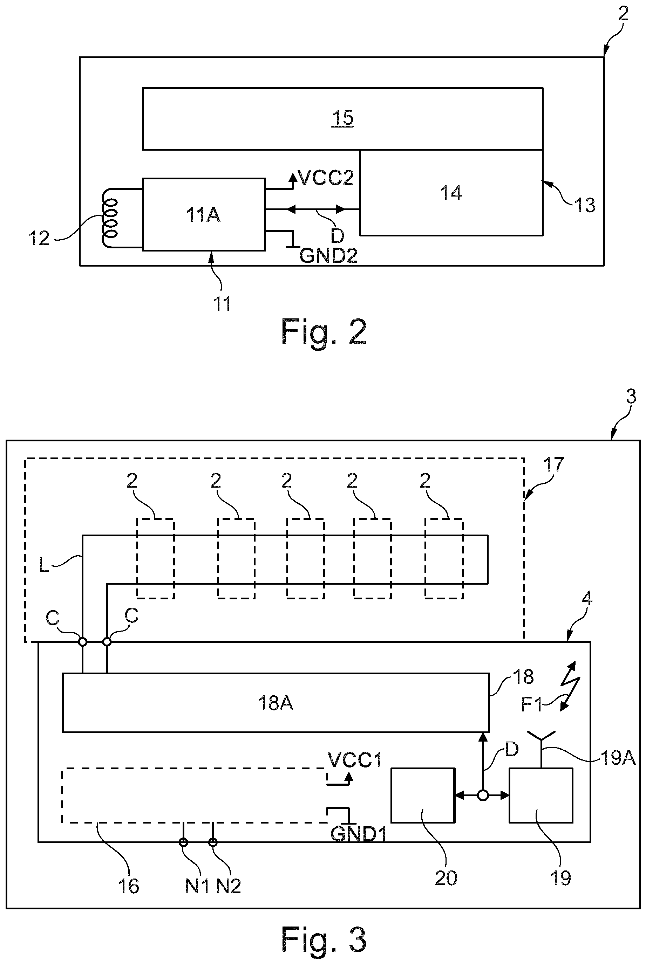

Die Regalschiene 3 ist ebenso wie die Regaletikettenanzeige 2 derart ausgebildet, dass die Regaletikettenanzeige 2 von vorne in die Regalschiene 3 eingesetzt werden kann und dabei über einen Schnappmechanismus derart mit ihr verriegelt, dass sie nur mit erheblichem Kraftaufwand wieder von der Regalschiene 3 entfernt werden kann. Zugleich erlaubt der erwähnte Mechanismus, dass die Regaletikettenanzeige 2 entlang der Regalschiene 3 mit im Verhältnis dazu nur geringem Kraftaufwand verschoben und folglich leicht an beliebiger Position platziert werden kann. Ein Schnappmechanismus der beschriebenen Art ist beispielsweise aus der WO2017/153481A1, Figur 2, bekannt. Der Mechanismus kann jedoch auch anders ausgebildet sein, worauf nachfolgend noch im Detail eingegangen wird.

Im Folgenden ist ein Blockschaltbild der Regaletikettenanzeige 2 anhand der Figur 2 erörtert.

Das Blockschaltbild zeigt eine erste NFC-Schnittstelle 11 mit ihrer Kopplungsspule 12. Mit Hilfe der Kopplungsspule 12 lässt sich eine induktive Kopplung mit einem anderen NFC-fähigen Gerät, im vorliegenden Fall der Versorgung-Einrichtung 4, konkret mit der dort ausgebildeten Leiterschleife L , etablieren, wenn die Kopplungsspule 12 entsprechend nahe (einige zehntel Millimeter bis ca. 4 Millimeter) an die Leiterschleife L herangebracht wird, was bei der an einer der Regalschienen 3 angebrachten Regaletikettenanzeige 2 der Fall ist. Während der induktiven Kopplung wird mit Hilfe der NFC-Schnittstelle 11 eine zweite Versorgungsspannung VCC2 (gegenüber einem lokalen zweiten Bezugspotential GND2) für den Betrieb der gesamten Regaletikettenanzeige 2 erzeugt, was die Elektronik bzw. erste elektronische Schaltung 11A der Regaletikettenanzeige 2 aktiviert, so dass auch eine kontaktlose bidirektionale Kommunikation von Daten D über ihre erste NFC-Schnittstelle 11 durchführbar ist. Bestandteil dieser Elektronik 11A ist auch ein NFC-Controller, der die gesamte NFC-Funktionalität bereitstellt, hier jedoch nicht im Detail dargestellt ist, jedoch in der ersten NFC-Schnittstelle 11 integriert ist.

Das Blockschaltbild zeigt auch eine mit der ersten NFC-Schnittstelle 11 verbundene Anzeigeeinheit 13, die sich in einen Electronic-Paper-Display-Controller 14 und einen damit steuerbaren Electronic-Paper-Display-Bildschirm 15 gliedert. Mithilfe des Controllers 14 werden die empfangenen Daten interpretiert, gegebenenfalls die Bildinhalte des Bildschirms 15 entsprechend verändert oder auch Statusinformationen in Form von Daten D über die erste NFC-Schnittstelle 11 an die Versorgung-Einrichtung 4 abgegeben.

Im Folgenden ist anhand der Figur 3 ein Blockschaltbild der Regalschiene 3 gemäß der Figur 1, insbesondere auch der Versorgung-Einrichtung 4, erörtert.

Wie erwähnt wird über die Versorgung-Anschlüsse N1 und N2 die für den Betrieb nötige (erste) Versorgungsspannung VCC1 zugeführt. Für den Fall, dass kein externes Netzteil 10 (siehe Figur 1) verwendet wird, sondern die Netz-Wechselspannung direkt zugeführt wird, kann auch die Versorgung-Einrichtung 4 ihr eigenes, internes Netzteil 16 aufweisen, das im vorliegenden Fall mit unterbrochener Linie angedeutet ist.

Hier trägt die Regalschiene 3 die direkt an ihr befestigte Leiterschleifen L.

Korrespondierend zu der Position der Leiterschleife L sind auch die dort positionierten Regaletikettenanzeigen 2, im vorliegenden Fall fünf Stück gemäß der untersten Regalschiene der Figur 1, angedeutet dargestellt. Im Unterschied zur Figur 1 ist auch die elektrische Verbindung der Schleifen-Anschlüsse C mit der Versorgung-Einrichtung 4, konkret mit einer elektronischen Versorgungseinheit, die als (zweite) NFC-Schnittstelle 18 mit einer zweiten elektronischen Schaltung 18A realisiert ist, dargestellt. Auch diese zweite NFC-Schnittstelle 18 weist ihren eigenen NFC-Controller (nicht dargestellt) auf. Die zweite NFC-Schnittstelle 18 ist bei Vorliegen einer induktiven Kopplung mit der ersten NFC-Schnittstelle 11 der Regaletikettenanzeige 2 zur kontaktlosen Übertragung von elektrischer Energie an die Regaletikettenanzeige 2 sowie zur bidirektionalen Kommunikation von Daten mit der durch Energiezufuhr aktivierten Regaletikettenanzeige 2 ausgebildet.

Die Versorgung-Einrichtung 4 weist weiterhin ein Accesspoint-Kommunikationsinterface 19 auf, das zum funkbasierten Kommunizieren mit dem in der Figur 1 dargestellten Access-Point 6 ausgebildet ist. Das Accesspoint-Kommunikationsinterface 19 weist zu diesem Zweck eine dafür ausgebildete Elektronik (nicht im Detail dargestellt) und eine Antennenkonfiguration 19A, die auch mehrere Antennen umfassen kann, auf. Zur Steuerung der internen Abläufe wie auch der Energieversorgung der Regaletikettenanzeige 2 und der Kommunikation mit der Regaletikettenanzeige 2, sowie der Kommunikation mit dem Access-Point 6 weist die Versorgung-Einrichtung 4 eine Steuereinheit 20 auf. Die Steuereinheit 20 ist mit Hilfe eines Mikrocontrollers realisiert, der über einen bidirektionalen Datenbus mit der zweiten NFC-Schnittstelle 18 und dem Accesspoint-Kommunikationsinterface 19 verbunden ist.

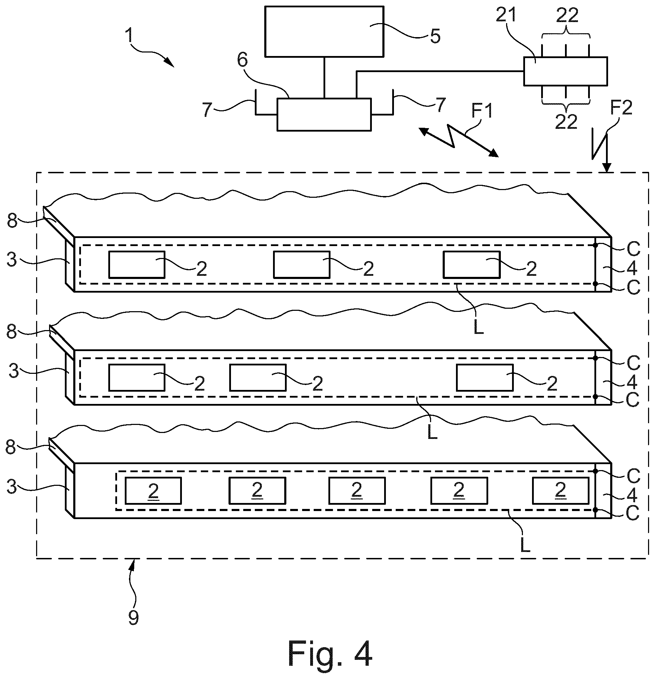

In der Figur 4 ist eine weitere Ausführungsform des Systems 1 dargestellt. Im Unterschied zu dem in der Figur 1 dargestellten System 1 fehlt hier das Netzteil 10. Im vorliegenden Fall erfolgt die Versorgung der einzelnen Versorgung-Einrichtungen 4 mit elektrischer Energie unter Zuhilfenahme eines Versorgungssenders 21 (auch als Funk-Energiequelle bezeichnet) als Versorgungsstation, der dazu ausgebildet ist, mit Hilfe eines fokussierten bzw. gerichteten (zweiten) Funksignals F2 mit einer bestimmten Sendeleistung, wie zum Beispiel 5 W, elektrische Energie an einen Empfänger (also eine der Versorgung-Einrichtungen 4) zu übertragen. Ein solcher Versorgungssender 21 weist auch eine Vielzahl von Antennen 22 (hier sind sechs Stück dargestellt) auf, mit deren Hilfe die Richtung der Energieübertragung (letztendlich die Ausbreitung des zweiten Funksignals F2) relativ genau einstellbar ist, so dass das Energie übertragenden zweiten Funksignale F2 präzise bei der jeweiligen Versorgung-Einrichtung 4 ankommt. Diese Energieübertragung ist unter dem Begriff "Power over WiFi" bekannt.

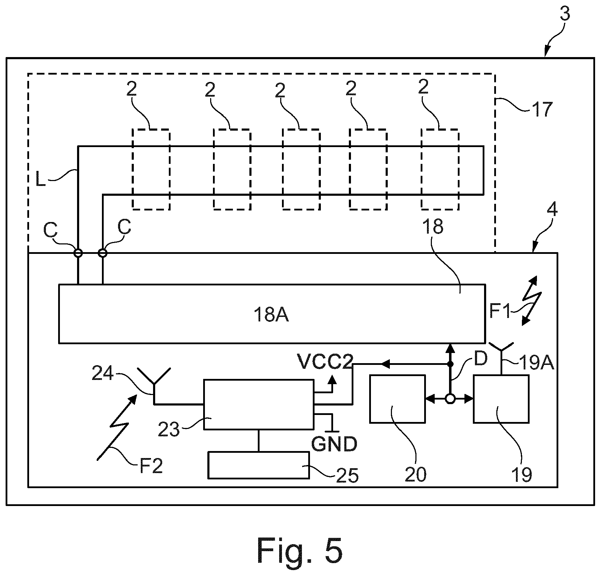

Um diese Art der Energieübertragung nutzen zu können, weist die in dem Ausführungsbeispiel der Figur 5 zur Anwendung kommende Versorgung-Einrichtung 4 einen zum Empfangen des zweiten Radiosignals F2 geeigneten Versorgungsempfänger 23 auf, der mit seiner Antennenkonfiguration 24 (die mehrere Antennen aufweisen kann) und einer Elektronik (nicht im Detail dargestellt) ausgerüstet ist, die dazu ausgebildet ist, das zweite Funksignal F2 zu empfangen und die damit übertragene Energie in einem internen elektrischen Energiespeicher 25 (aufladbaren Batterie, Akkumulator) zu speichern und damit die zweite Versorgungsspannung VCC2 gegenüber einem zweiten Bezugspotential GND2 zu generieren.

Im Betrieb kann die Versorgung-Einreichung 4 beispielsweise mit Hilfe ihrer Steuereinheit 20 den Ladezustand des Energiespeichers 25 abfragen bzw. überwachen. Sobald der Ladezustand unter ein bestimmtes Niveau sinkt, kann die Steuereinheit 20 mit Hilfe des ersten Funksignals F1 eine (Neu-) Aufladung anfordern. Diese Anforderung wird vom Access-Point 6 empfangen und kann je nach Implementierung direkt an den Versorgungsender 21 weitergeleitet werden oder unter Einbeziehung des Servers 5 an den Versorgungssender 21 weitergeleitet werden. Da im System 1 (z.B. dem Server 5) die genaue geographische Position (die dreidimensionalen Koordinaten) jeder der Versorgung-Einrichtungen 4 sowie ihre eindeutige Kennung bekannt ist, kann der Versorgungsender 21 das zweite Funksignal F2 präzise gerichtet hin zur Position der jeweiligen das Aufladen anfordernden Versorgung-Einrichtung 4 aussenden. Dort wird das zweite Funksignal F2 empfangen und die mit seiner Hilfe übertragene Energie zur Aufladung des dortigen internen Energiespeichers 25 verwendet.

Die hier beschriebene Regalschiene 3 ist also zur kontaktlosen Kommunikation mit den an ihr installierte Regaletikettenanzeigen 2 und einem ihr funktechnisch zugeordneten Access-Point 6 und zur kontaktlosen Energiebereitstellung im Sinne von Energiespeicherung für ihren eigenen Betrieb wie auch für die Energieversorgung der jeweiligen Regaletikettenanzeige 2, während sich die besagte Regaletikettenanzeige 2 in einem Kommunikationszustand und / oder in einem Updatezustand ihres Bildschirms 15 befindet bzw. ganz allgemein ihre Elektronik aktiv ist, ausgebildet.

An dieser Stelle sei auch erwähnt, dass der Versorgungssender 21 auch in dem Access-Point 6 verbaut sein kann.

Die Figur 6 zeigt eine Regalschiene 3 mit der daran befestigten Regaletikettenanzeige 2 und der seitlich in die Regalschiene 3 eingesetzten Versorgung-Einrichtung 4. Diese Regalschiene 3 weist bespielhaft eine Länge von ca.3 Meter, eine Höhe von ca. 4,5 cm und eine Dicke von 1,2 cm auf.

Die Figur 7 zeigt einen Schnitt durch die Regalschiene 3. Gemäß der in der Figur 6 eingezeichneten Schnittfläche A-A verläuft dieser Schnitt quer (normal auf die Vorderseite der Regalschiene 3) durch die Regalschiene 3. Weiterhin ist im Unterschied zu der Figur 6 auch ein vorderer Teil eines Regalbodens 8 sichtbar, an dem die Regalschiene 3 mit Hilfe einer aus Metall gefertigten Hutschiene 26 befestigt ist. Die Hutschiene 26 bildet eine Leitfähigkeitsstruktur zur Erzeugung von definierten Dämpfungsverhältnissen für die kontaktlose Energieübertragung von der Versorgung-Einrichtung 4 an das Regaletikettenanzeige 2 wie auch für die kontaktlose Kommunikation zwischen der Versorgung-Einrichtung 4 und der Regaletikettenanzeige 2. Die Hutschiene 26 kann durch Verkleben, Vernieten, Klemmen, Stecken oder Verschrauben usw. mit dem Regalboden 8 verbunden sein, worauf jedoch in den Figuren nicht näher eingegangen ist.

Die Regalschiene 3 weist eine erste Befestigungsstruktur zur Befestigung der Regaletikettenanzeige 2 auf. Die erste Befestigungsstruktur weist eine zwischen einem Kopfbereich 27 und einem Fußbereich 28 der Regalschiene 3 verlaufende Wand 29 auf. Analog zu dem Kopf- und Fußbereich 27, 28 verläuft auch die Wand 29 entlang der gesamten Regalschiene 3 und bildet an ihrer zur Regaletikettenanzeige 2 hin orientierten Wand-Vorderseite eine Regaletiketten-Ebene, an der die Regaletikettenanzeige 2 im Wesentlichen bündig mit ihrer Rückwand anliegt. Die erste Befestigungsstruktur weist zusätzlich zu der Wand eine an dem Kopfbereich 27 ausgebildete und sich entlang des Kopfbereichs 27 erstreckende erste Befestigungsrille 30 und eine am Fußbereich 28 ausgebildete und sich entlang des Fußbereichs 28 erstreckende zweite Befestigungsrille 31 auf. Die Befestigungsrillen 30 und 31 sind derart ausgebildet, dass das Regaletikett 2 mit seinen Befestigungselementen 32 und 33 in sie verriegelnd einsetzbar ist, sodass die Rückwand des Regaletiketts 2 an der Regaletiketten-Ebene anliegend positioniert ist. Entsprechend sind die Befestigungselemente 32 und 33 positioniert und ausgebildet und das Gehäuse des Regaletiketts 2 dimensioniert bzw. geformt.

Die Regalschiene 3 weist weiterhin eine zweite Befestigungsstruktur zur Befestigung der Leiterschleife L auf. Auch die zweite Befestigungsstruktur weist die Wand 29 auf, wobei an der Wand-Rückseite zwei Röhren 34 ausgebildet sind. Die zwei Röhren 34 sind parallel zueinander ausgerichtet und verlaufen in einer definierten Entfernung von ca. 1 cm voneinander lokalisiert etwa entlang der gesamten Länge der Regalschiene 2. Ihre zwei Zentralachsen definieren eine Leiterschleifen-Ebene, die in einem definierten ersten Abstand von ca. 2,5 Millimeter parallel zur Regaletiketten-Ebene verläuft. Die Wand 29 weist hier eine Dicke von ca. 2 Millimeter auf und die Röhren 34 sind zumindest teilweise in die Wand 29 hineinversetzt, was einen geringen Abstand zwischen der Leiterschleifen-Ebene und der Regaletiketten-Ebene erlaubt, ohne dass die Belastbarkeit der Wand 29 unnötig leiden würde.

Die Regalschiene 3 weist weiterhin eine dritte Befestigungsstruktur zur Befestigung der Hutschiene 26 auf. Die dritte Befestigungsstruktur weist zwei Teilstrukturen auf, welche einerseits kopfseitig in einer Hängevorrichtung 35 zum Einhängen der Regalschiene 3 und andererseits fußseitig in einer Schnapplippe 36 zum Einschnappen gebildet sind.

Die dritte Befestigungsstruktur weist weiterhin ein beim Kopfbereich 27 positioniertes erstes Distanzelement 37 und ein beim Fußbereiche 28 positioniertes zweites Distanzelement 38 auf. Die beiden Distanzelemente 37 und 38 dienen zur Fixierung und Einhaltung eines definierten zweiten Abstands der Hutschiene 26 von der Leiterschleifen-Ebene, wobei auch hier eine im Wesentlichen parallele Orientierung der flächigen Struktur der Hutschiene 26 zu der Leiterschleifen-Ebene realisiert ist. Die beiden Distanzelemente 37 und 38 sind im Wesentlichen im Winkel von 90° weg von der Wand-Rückseite orientiert und erstrecken sich von der Wand 29 hin zu der Hutschiene 26, wo sie die Hutschiene 26 berühren und die Sollposition sicherstellen. Im vorliegenden Fall ist die Hutschiene 26 in dem zweiten Abstand von ca. 7 Millimeter von der Leiterschleifen-Ebene entfernt positioniert. Die Hutschiene 26 selbst weist eine Dicke von ca. 1 Millimeter auf. Ihre Höhe beträgt etwa 2,5 cm, woran sich kopfseitig und fußseitig anschließend noch jeweils ca. 5 Millimeter lange hutkrempen-artig um ca. 3 mm abgesetzte Ränder erstrecken, mit denen das Zusammenwirken mit dem Kunststoffkörper der Regalschiene 3 erfolgt. Die Länge der Hutschiene 26 entspricht in etwa der Länge der Regalschiene 3.

Weiterhin ist in der Figur 7 die äußere Ausdehnung der an der Rückwand der Regaletikettenanzeige 2 ausgebildeten Kopplungsspule 12 durch die Bemaßung 39 eingetragen. Hier ist deutlich sichtbar, dass die Kopplungsspule plan an der Regaletiketten-Ebene anliegt und dort korrespondierend zu und sogar überlappend mit der räumlichen Ausdehnung der Leiterschleife L gemessen in Richtung der Höhe der Regalschiene 2 angeordnet ist.

Die Regalschiene 3 weist weiterhin eine vierte Befestigungsstruktur auf, die zur Befestigung der Versorgung-Einrichtung dient, um die Versorgung-Einrichtung an einem Endbereich (linkes oder rechtes Ende) der Regalschiene 3 zwischen die Wand 29 der Regalschien 3 und die mit Hilfe der dritten Befestigungsstruktur befestigte Hutschiene 26 einzuschieben und zu fixieren, so dass die dort verfügbare Leiterschleifen-Anschlüsse C der Leiterschleife L mit der Versorgung-Einrichtung 4 kontaktiert sind. Die vierte Befestigungsstruktur weist zu diesem Zweck einen an der Wand-Rückseite unterhalb des ersten Distanzelements 37 ausgebildeten und hin zum Fußbereich 28 offenen ersten Einschubkanal 40 und einen an der Wand-Rückseite oberhalb der Schnapplippe 36 ausgebildeten und hin zu dem Kopfbereich 27 offenen zweiten Einschubkanal 41 auf. In die beiden Einschubkanäle 40 und 41 lässt sich die Versorgung-Einrichtung 4 mit ihren Befestigungsschienen 42 einschieben, die in der Figur 8 sichtbar sind. Zudem weist die vierte Befestigungsstruktur eine am kopfseitigen Ende der Wand 29 und eine am fußseitigen Ende der Wand 29 lokalisierte Rund-Öffnungen 43 auf, in die von der Seite der Regalschiene 3 her Befestigungsschrauben 44 (siehe z.B. Figur 6 aber auch 9 und 10) zum Verschrauben der Versorgung-Einrichtung 4 mit der Regalschiene 3 eindrehbar sind.

Die Figur 8 zeigt einen Schnitt durch die Regalschiene 3 gemäß der in der Figur 6 eingezeichneten Schnittfläche B-B, die quer (normal auf die Vorderseite der Regalschiene 3 ausgerichtet) durch die Regalschiene 3 orientiert ist und rechts von der Schnittfläche A-A an jener Stelle der Regalschiene 3 verläuft, an der Kontaktelemente 45 der Versorgung-Einrichtung 4 ausgebildet sind. Zwecks verbesserter Übersichtlichkeit wurde die Vielzahl der Bezugszeichen, die nicht unmittelbar die Befestigung der Versorgung-Einrichtung 4 betreffen, in der Figur 7 ausgeblendet.

Weiterhin sind im vorliegenden Fall zwei Kontaktflächen 46 vorgesehen, wobei jede der Kontaktflächen 46 mit einem der Schleifen-Anschlüsse C verlötet ist. Die Kotaktflächen 46 werden bei vollständig in die Regalschiene 3 eingeschobener Versorgung-Einrichtung 4, also wenn diese in der Sollposition positioniert ist, mit den als Federkontakte ausgebildeten Kontaktelementen 45 kontaktiert, so dass eine Verbindung mit des Leiterschleife L hergestellt ist und diese als Bestandteil der zweiten NFC-Schnittstelle 18 nutzbar ist. Im Unterschied zu dieser Ausbildung kann jedoch bei einer näher beieinander liegenden Positionierung der Kontaktelemente 45 auf die Kontaktflächen 46 verzichtet werden und der die Leiterschleife L bildende Draht an den als Leiterschleifen-Anschlüssen C vorgesehenen Endbereichen des Drahtes direkt kontaktiert werden.

Zu erwähnen ist noch, dass am anderen Ende der Regalschiene, genauer gesagt am anderen Ende der Röhren 34 der Draht der Leiterschleife L einteilig von der einen Röhre 34 zur anderen Röhre verläuft.

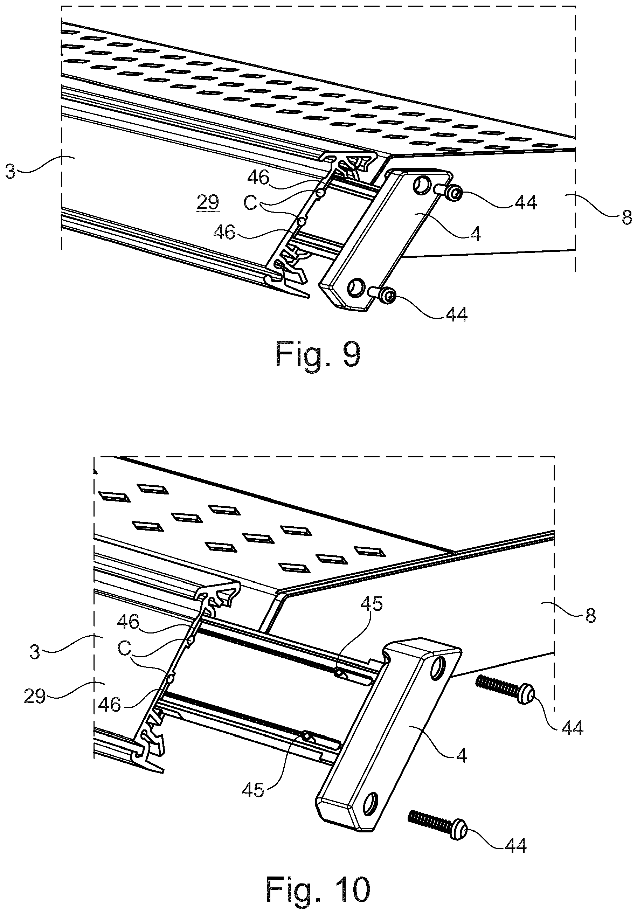

Abschließend sei noch auf die Figuren 9 und 10 eingegangen, wobei die Figur 9 in einer Darstellung die nur geringfügig aus der Regalschiene 3 herausgezogene Versorgung-Einrichtung 4 zeigt und die Figur 10 in einer leicht geänderten Darstellung auch die Kontaktierungselemente 45 zeigt. Auch hier wurde auf die überwiegende Anzahl der Bezugszeichen verzichtet, um die Darstellungen nicht zu überladen.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Regalschiene (3) für ein elektronisches Regaletiketten-System (1),
- wobei die Regalschiene (3) eine erste Befestigungsstruktur zur Befestigung von zumindest einem elektronischen und auf kontaktlose Weise mit Energie versorgbaren Regaletikett (2), insbesondere einer elektronischen Regaletikettenanzeige, aufweist, wobei die erste Befestigungsstruktur eine zwischen einem Kopfbereich (27) und einem Fußbereich (28) der Regalschiene (3) verlaufende Wand (29) mit einer Wand-Vorderseite und einer Wand-Rückseite aufweist, die mit Ihrer Wand-Vorderseite zur Definition einer Regaletiketten-Ebene für die Positionierung des zumindest einen Regaletiketts (2) entlang der Wand (29) dient, und
- wobei die Regalschiene (3) zumindest eine, insbesondere röhrenförmig oder kanalförmig ausgebildete, zweite Befestigungsstruktur zur Befestigung von zumindest einer Leiterschleife (L) in einer Leiterschleifen-Ebene aufweist, wobei die Leiterschleifen-Ebene parallel zu der Regaletiketten-Ebene ausgerichtet ist und im definierten ersten Abstand von der Regaletiketten-Ebene verläuft, und
- wobei die Regalschiene (3) eine dritte Befestigungsstruktur zur Befestigung einer, insbesondere flächenhaft ausgebildeten, Leitfähigkeitsstruktur (26) in einem definierten zweiten Abstand von der Leiterschleifen-Ebene aufweist,
**dadurch gekennzeichnet, dass**
die zweite Befestigungsstruktur an der Wand-Rückseite ausgebildet ist, und dass die dritte Befestigungsstruktur derart ausgebildet ist, dass die Leitfähigkeitsstruktur (26) mit einer Höhe aufnehmbar ist, die zumindest die gesamte Leiterschleife (L) abdeckt, insbesondere mit einer Höhe, die etwa der Höhe der Wand (29) gemessen zwischen dem Kopfbereich (27) und dem Fußbereich (28) der Regalschiene (3) entspricht.

2. Regalschiene (3) nach Anspruch 1, wobei die dritte Befestigungsstruktur zwei Teilstrukturen aufweist, zwischen denen die Leitfähigkeitsstruktur (26) aufnehmbar ist, wobei die erste Teilstruktur entlang des Kopfbereichs (27) der Regalschiene (3) und die zweite Teilstruktur entlang des Fußbereichs (28) der Regalschiene (3) verläuft.

3. Regalschiene (3) nach einem der vorangehenden Ansprüche, wobei die dritte Befestigungsstruktur entlang der Länge der Regalschiene (3) derart ausgebildet ist, dass
- die Leitfähigkeitsstruktur (26) seitlich in die Regalschiene (3) einschiebbar ist oder
- die Leitfähigkeitsstruktur (26) an ihren äußeren Rändern in die dritte Befestigungsstruktur einschnappbar ist.

4. Regalschiene (3) nach einem der vorangehenden Ansprüche, wobei die dritte Befestigungsstruktur zur Aufnahme einer plattenförmigen, insbesondere abgesetzte Ränder aufweisenden, Leitfähigkeitsstruktur (26) ausgebildet ist.

5. Regalschiene (3) nach einem der vorangehenden Ansprüche, wobei die dritte Befestigungsstruktur zur Aufnahme der Leitfähigkeitsstruktur (26) entlang der gesamten Leiterschleife (L), besonders bevorzugt entlang der gesamten Regalschiene (3) ausgebildet ist.

6. Regalschiene (3) nach einem der vorangehenden Ansprüche, wobei die erste Befestigungsstruktur zusätzlich zu der Wand (29) eine am Kopfbereich (27) ausgebildete und sich entlang des Kopfbereichs (27) erstreckende erste Befestigungsrille (30) und eine am Fußbereich (28) ausgebildete und sich entlang des Fußbereichs (28) erstreckende zweite Befestigungsrille (31) aufweist und die Befestigungsrillen (30, 31) derart ausgebildet sind, dass ein Regaletikett (2) mit seinen Befestigungselementen in sie verriegelnd einsetzbar ist und eine Rückwand des Regaletiketts (2) an der Regaletiketten-Ebene anliegend positionierbar ist.

7. Regalschiene (3) nach einem der vorangehenden Ansprüche, wobei die zweite Befestigungsstruktur zwei zueinander in einem dritten Abstand benachbart und in Längsrichtung der Regalschiene (3) verlaufende Röhren (34) mit jeweils offenem Ende aufweist, die derart ausgebildet sind, dass in sie ein die Leiterschleife (L) realisierender Draht einsetzbar ist, sodass der Draht an einem Endbereich der Regalschiene (3) die beiden Röhren (34) verbindet und am anderen Endbereich der Regalschiene (3) Leiterschleifen-Anschlüsse (C) der Leiterschleife (L) für ihre Kontaktierung zugänglich sind.

8. Regalschiene (3) nach einem der vorangehenden Ansprüche, die eine vierte Befestigungsstruktur aufweist, die zur Befestigung einer Versorgung-Einrichtung (4) für die kontaktlose Energieversorgung des zumindest einen Regaletiketts (2) unter Ausnutzung der zumindest einen Leiterschleife (L) dient, wobei die vierte Befestigungsstruktur zwischen der zweiten und der dritten Befestigungsstruktur derart ausgebildet ist, dass die Versorgung-Einrichtung (4) an einem Endbereich der Regalschiene (3) zwischen die Wand (29) der Regalschiene (3) und die mit Hilfe der dritten Befestigungsstruktur befestigbare Leitfähigkeitsstruktur (26) einschiebbar ist, so dass dort verfügbare Leiterschleifen-Anschlüsse (C) der Leiterschleife (L) mit der Versorgung-Einrichtung (4) kontaktierbar sind.

9. Elektronisches Regaletiketten-System (1), das zumindest eine Regalschiene (3) nach einem der Ansprüche 1 bis 8 aufweist und das
- zumindest ein elektronisches Regaletikett (2) aufweist, das mit Hilfe der ersten Befestigungsstruktur an der Regaletiketten-Ebene befestigt ist und das eine erste elektronische Schaltung (11A) verbunden mit einer Kopplungsspule (12) für seine kontaktlose Energieversorgung aufweist, und das
- zumindest eine Leiterschleife (L) aufweist, die mit Hilfe der zweiten Befestigungsstruktur in der Leiterschleifen-Ebene befestigt ist, und das
- eine in die Regalschiene (3) eingesetzte Versorgung-Einrichtung (4) aufweist, die mit besagter zumindest einen Leiterschleife (L) über deren Leiterschleifen-Anschlüsse (C) elektrisch leitend verbunden ist, wobei die Versorgung-Einrichtung (4) eine zweite elektronische Schaltung (18A) zur Erzeugung eines Wechselfeldes zwecks Herstellung einer induktiven Kopplung zwischen der Leiterschleife (L) und der Kopplungsspule (12) des Regaletiketts (3) aufweist, und das
- eine mit Hilfe der dritten Befestigungsstruktur befestigte Leitfähigkeitsstruktur (26) aufweist,
wobei die zweite elektronische Schaltung (18A) auf die durch die Leitfähigkeitsstruktur (26) definierten Umgebungsbedingungen elektronisch abgestimmt ist.

10. System (1) nach Anspruch 9, wobei die erste elektronische Schaltung (11A) zusammen mit ihrer Kopplungsspule (12) eine erste NFC-Schnittstelle (11) des Regaletiketts (2) realisiert und wobei die zweite elektronische Schaltung (18A) mit der damit verbundenen Leiterschleife (L) eine zweite NFC-Schnittstelle (18) der Versorgung-Einrichtung realisiert.

11. System (1) nach einem der Ansprüche 9 bis 10, wobei die elektronische Versorgung-Einrichtung (4) Kontaktierungselemente, insbesondere gefedert gelagerte Kontaktstifte (45), zum Herstellen einer elektrisch leitenden Verbindung mit den Leiterschleifen-Anschlüssen (C) aufweist, und die Kontaktierungselemente derart positioniert sind, dass sie die Leiterschleifen-Anschlüsse (C) kontaktieren, wenn sich die Leiterschleife (L) und die Versorgung-Einrichtung (4) in ihren Sollpositionen in der Regalschiene (3) befinden.

12. System (1) nach einem der vorangehenden Ansprüche 9 bis 11, wobei das Regaletikett (2) eine im Wesentlichen seine Rückseite bildende Leiterplatte aufweist, an der die Kopplungsspule (12) ausgebildet ist.

13. System (1) nach Anspruch 12, wobei zumindest eine nach außen orientierte Seite der Leiterplatte mit einem Lack oder einem dünnen Aufkleber, bevorzugt schützend gegen elektrostatische Entladung ausgebildet, überzogen ist.

## Claims

1. A shelf rail (3) for an electronic shelf tag system (1),
- wherein the shelf rail (3) comprises a first fastening structure for fastening at least one electronic shelf tag (2), which can be supplied with energy in a contact-free manner, in particular an electronic shelf tag display, wherein the first fastening structure comprises a wall (29) running between a head region (27) and a foot region (28) of the shelf rail (3) with a wall front side and a wall rear side, which, with its wall front side, serves the purpose of defining a shelf tag plane for positioning the at least one shelf tag (2) along the wall (29), and
- wherein the shelf rail (3) comprises at least one second fastening structure, in particular formed in a tubular or channel-shaped manner, for fastening at least one conductor loop (L) in a conductor loop plane, wherein the conductor loop plane is aligned parallel to the shelf tag plane and runs at the defined first distance from the shelf tag plane, and
- wherein the shelf rail (3) comprises a third fastening structure for fastening a conductivity structure (26), in particular formed in a planar manner, at a defined second distance from the conductor loop plane,
**characterized in that**
the second fastening structure is formed on the wall rear side, and that the third fastening structure is formed in such a way that the conductivity structure (26) can be received with a height, which covers at least the entire conductor loop (L), in particular with a height, which corresponds approximately to the height of the wall (29), measured between the head region (27) and the foot region (28) of the shelf rail (3).

2. The shelf rail (3) according to claim 1, wherein the third fastening structure comprises two partial structures, between which the conductivity structure (26) can be received, wherein the first partial structure runs along the head region (27) of the shelf rail (3) and the second partial structure runs along the foot region (28) of the shelf rail (3).

3. The shelf rail (3) according to one of the preceding claims, wherein the third fastening structure along the length of the shelf rail (3) is formed in such a way that
- the conductivity structure (26) can be laterally inserted into the shelf rail (3)
or
- the conductivity structure (26) can, on its outer edges, be snapped into the third fastening structure.

4. The shelf rail (3) according to one of the preceding claims, wherein the third fastening structure is formed to receive a plate-shaped conductivity structure (26), in particular comprising offset edges.

5. The shelf rail (3) according to one of the preceding claims, wherein the third fastening structure is formed to receive the conductivity structure (26) along the entire conductor loop (L), particularly preferably along the entire shelf rail (3).

6. The shelf rail (3) according to one of the preceding claims, wherein the first fastening structure comprises, in addition to the wall (29), a first fastening groove (30) formed on the head region (27) and extending along the head region (27) and a second fastening groove (31) formed on the foot region (28) and extending along the foot region (28), and the fastening grooves (30, 31) are formed in such a way that a shelf tag (2) can be inserted with its fastening elements into said fastening grooves so as to lock them and a rear wall of the shelf tag (2) can be positioned so as to abut against the shelf tag plane.

7. The shelf rail (3) according to one of the preceding claims, wherein the second fastening structure comprises two tubes (34), which run adjacently to one another at a third distance and in the longitudinal direction of the shelf rail (3), each with an open end, which are formed in such a way that a wire, which realizes the conductor loop (L), can be inserted therein, so that the wire connects the two tubes (34) on an end region of the shelf rail (3) and conductor loop connections (C) of the conductor loop (L) are accessible for the contacting thereof on the other end region of the shelf rail (3).

8. The shelf rail (3) according to one of the preceding claims, which comprises a fourth fastening structure, which serves the purpose of fastening a supply means (4) for the contact-free energy supply of the at least one shelf tag (2) by utilizing the at least one conductor loop (L), wherein the fourth fastening structure between the second and the third fastening structure is formed in such a way that, on an end region of the shelf rail (3), the supply means (4) can be inserted between the wall (29) of the shelf rail (3) and the conductivity structure (26), which can be fastened with the help of the third fastening structure, so that conductor loop connections (C) of the conductor loop (L), which are available there, can be contacted with the supply means (4).

9. An electronic shelf tag system (1), which comprises at least one shelf rail (3) according to one of claims 1 to 8 and which
- comprises at least one electronic shelf tag (2), which is fastened to the shelf tag plane with the help of the first fastenings structure and which comprises a first electronic circuit (11A) connected to a coupling coil (12) for its contact-free energy supply, and which
- comprises at least one conductor loop (L), which is fastened in the conductor loop plane with the help of the second fastening structure, and which
- comprises a supply means (4) inserted into the shelf rail (3), which is electrically conductively connected to said at least one conductor loop (L) via the conductor loop connections (C) thereof, wherein the supply means (4) comprises a second electronic circuit (18A) for generating an alternating field for the purpose of establishing an inductive coupling between the conductor loop (L) and the coupling coil (12) of the shelf tag (3),
and which
- comprises a conductivity structure (26), which is fastened with the help of the third fastening structure,
wherein the second electronic circuit (18A) is electronically adapted to the ambient conditions defined by the conductivity structure (26).

10. The system (1) according to claim 9, wherein the first electronic circuit (11A), together with its coupling coil (12), realizes a first NFC interface (11) of the shelf tag (2) and wherein the second electronic circuit (18A), with the conductor loop (L) connected thereto, realizes a second NFC interface (18) of the supply means.

11. The system (1) according to one of claims 9 to 10, wherein the electronic supply means (4) comprises contacting elements, in particular spring-loaded contact pins (45), for establishing an electrically conductive connection with the conductor loop connections (C), and the contacting elements are positioned in such a way that they contact the conductor loop connections (C) when the conductor loop (L) and the supply means (4) are in their target positions in the shelf rail (3).

12. The system (1) according to one of the preceding claims 9 to 11, wherein the shelf tag (2) comprises a printed circuit board essentially forming its rear side, on which the coupling coil (12) is formed.

13. The system (1) according to claim 12, wherein at least one side, which is oriented outwards, of the printed circuit board is covered with a varnish or a thin sticker, preferably formed so as to protect against electrostatic discharge.

## Revendications

1. Rail de rayonnage (3), destiné à un système électronique d'étiquettes (1) de rayonnage,
- le rail de rayonnage (3) comportant une première structure de fixation, destinée à fixer au moins une étiquette de rayonnage (2) électronique et susceptible d'être alimentée sans contact en énergie, notamment un affichage d'étiquette de rayonnage électronique, la première structure de fixation comportant une paroi (29) s'écoulant entre une zone haute (27) et une zone basse (28) du rail de rayonnage (3), dotée d'une face avant de paroi et d'une face arrière de paroi, qui par sa face avant de paroi sert à la définition d'un plan d'étiquette de rayonnage, pour le positionnement de l'au moins une étiquette de rayonnage (2) le long de la paroi (29) et
- le rail de rayonnage (3) comportant au moins une deuxième structure de fixation, conçue notamment de forme tubulaire ou en forme de canal, destinée à fixer au moins une boucle conductrice (L) dans un plan de boucle conductrice, le plan de boucle conductrice étant orienté à la parallèle du plan d'étiquette de rayonnage et s'écoulant avec un premier écart défini par rapport au plan d'étiquette de rayonnage et
- le rail de rayonnage (3) comportant une troisième structure de fixation, destinée à fixer une structure de conductivité (26), conçue notamment en nappe avec un deuxième écart défini par rapport au plan de boucle conductrice,
**caractérisé en ce que**
la deuxième structure de fixation est conçue sur la face arrière de paroi et **en ce que** la troisième structure de fixation est conçue de telle sorte que la structure de conductivité (26) puisse être réceptionnée à une hauteur qui recouvre au moins l'ensemble de la boucle conductrice (L), notamment à une hauteur, qui correspond approximativement à la hauteur de la paroi (29), mesurée entre la zone haute (27) et la zone basse (28) du rail de rayonnage (3).

2. Rail de rayonnage (3) selon la revendication 1, la troisième structure de fixation comportant deux structures partielles entre lesquelles la structure de conductivité (26) peut être réceptionnée, la première structure partielle s'écoulant le long de la zone haute (27) du rail de rayonnage (3) et la deuxième structure partielle s'écoulant le long de la zone basse (28) du rail de rayonnage (3).

3. Rail de rayonnage (3) selon l'une quelconque des revendications précédentes, la troisième structure de fixation étant conçue le long du rail de rayonnage (3), de telle sorte que
- la structure de conductivité (26) soit emboîtable latéralement dans le rail de rayonnage (3)
ou
- la structure de conductivité (26) soit enclenchable sur ses bords extérieurs dans la troisième structure de fixation.

4. Rail de rayonnage (3) selon l'une quelconque des revendications précédentes, la troisième structure de fixation étant conçue pour recevoir une structure de conductivité (26) en forme de plaque, comportant notamment des bords déportés.

5. Rail de rayonnage (3) selon l'une quelconque des revendications précédentes, la troisième structure de fixation étant conçue pour recevoir la structure de conductivité (26) le long de l'ensemble de la boucle conductrice (L), de manière particulièrement préférentielle, le long de l'ensemble du rail de rayonnage (3).

6. Rail de rayonnage (3) selon l'une quelconque des revendications précédentes, la première structure de fixation comportant additionnellement à la paroi (29) une première cannelure de fixation (30) conçue sur la zone haute (27) et s'étendant le long de la zone haute (27) et une deuxième cannelure de fixation (31) conçue sur la zone basse (28) et s'étendant le long de la zone basse (28) et les cannelures de fixation (30, 31) étant conçues de telle sorte, qu'une étiquette de rayonnage (2) soit insérable dans elles par ses éléments de fixation, de manière à assurer le verrouillage et qu'une paroi arrière de l'étiquette de rayonnage (2) soit positionnable en étant adjacente au plan d'étiquette de rayonnage.

7. Rail de rayonnage (3) selon l'une quelconque des revendications précédentes, la deuxième structure de fixation comportant deux tubes (34) mutuellement voisins avec un troisième écart et s'écoulant dans la direction longitudinale du rail de rayonnage (3), pourvus chacun d'une extrémité ouverte, qui sont conçus de telle sorte que soit insérable dans eux un fil métallique réalisant la boucle conductrice (L), de telle manière que sur une zone d'extrémité du rail de rayonnage (3), le fil métallique relie les deux tubes (34) et sur l'autre zone d'extrémité du rail de rayonnage (3), des bornes de boucle conductrice (C) de la boucle conductrice (L) soient accessibles pour leur mise en contact.

8. Rail de rayonnage (3) selon l'une quelconque des revendications précédentes, qui comporte une quatrième structure de fixation, qui sert à fixer un système d'alimentation (4) pour l'alimentation en énergie sans contact de l'au moins une étiquette de rayonnage (2) en exploitant l'au moins une boucle conductrice (L), la quatrième structure de fixation étant conçue entre la deuxième et la troisième structure de fixation, de telle sorte que le système d'alimentation (4) soit emboîtable sur une zone d'extrémité du rail de rayonnage (3), entre la paroi (29) du rail de rayonnage (3) et la structure de conductivité (26) susceptible d'être fixée à l'aide de la troisième structure de fixation, de telle sorte que des bornes de boucle conductrice (C) de la boucle conductrice (L) qui y sont disponibles puissent être mises en contact avec le système d'alimentation (4).

9. Système électronique d'étiquettes (1) de rayonnage, qui comporte au moins un rail de rayonnage (3) selon l'une quelconque des revendications 1 à 8 et qui
- comporte au moins une étiquette de rayonnage (2) électronique, qui à l'aide de la première structure de fixation est fixée sur le plan d'étiquette de rayonnage et qui comporte un premier circuit électronique (11A), connecté avec une inductance de couplage (12), pour son alimentation en énergie sans contact et qui
- comporte au moins une boucle conductrice (L), qui à l'aide de la deuxième structure de fixation est fixée dans le plan de boucle conductrice et qui
- comporte un système d'alimentation (4) inséré dans le rail de rayonnage (3), qui est connecté de manière conductrice d'électricité avec l'au moins une boucle conductrice (L) citée, par l'intermédiaire des bornes de boucle conductrice (C) de celle-ci, le système d'alimentation (4) comportant un deuxième circuit électronique (18A), destiné à générer un champ alternatif aux fins d'établissement d'un couplage inductif entre la boucle conductrice (L) et l'inductance de couplage (12) de l'étiquette de rayonnage (3),
et qui
- comporte une structure de conductivité (26) fixée à l'aide de la troisième structure de fixation,
le deuxième circuit électronique (18A) étant électroniquement adapté aux conditions environnantes définies par la structure de conductivité (26).

10. Système (1) selon la revendication 9, le premier circuit électronique (11A) réalisant conjointement avec son inductance de couplage (12) une première interface NFC (11) de l'étiquette de rayonnage (2) et le deuxième circuit électronique (18A) réalisant avec la boucle conductrice (L) connectée avec celui-ci une deuxième interface NFC (18) du système d'alimentation.

11. Système (1) selon l'une quelconque des revendications 9 à 10, le système d'alimentation (4) électronique comportant des éléments de mise en contact, notamment des broches de contact (45) logées sur ressort, pour établir une connexion conductrice d'électricité avec les bornes de boucle conductrice (C) et les éléments de mise en contact étant positionnés de sorte à entrer en contact avec les bornes de boucle conductrice (C), lorsque la boucle conductrice (L) et le système d'alimentation (4) se trouvent dans leur position de consigne dans le rail de rayonnage (3).

12. Système (1) selon l'une quelconque des revendications 9 à 11 précédentes, l'étiquette de rayonnage (2) comportant une carte de circuit imprimé, constituant sensiblement sa face arrière, sur laquelle est conçue l'inductance de couplage (12).

13. Système (1) selon la revendication 12, au moins une face de la carte de circuit imprimé orientée vers l'extérieur étant recouverte d'une laque ou d'un autocollant mince, conçu de préférence pour la protection contre une décharge électrostatique.
